# EUROPEAN PATENT APPLICATION

(11) **EP 2 669 810 A1**
(43) Date of publication of application: **04.12.2013**
(21) Application number: 12739500.2
(22) Date of filing: 06.01.2012
(51) Int. Cl.: G06F 13/00

(54) **INFORMATION PROCESSING DEVICE, INFORMATION PROCESSING SYSTEM, INFORMATION PROCESSING METHOD AND INFORMATION PROCESSING PROGRAM**

(30) Priority: 25.01.2011 JP 2011012947
(71) Applicant: NEC Corporation, Tokyo 108-8001 (JP)
(72) Inventor: SATO, Tadashi, Tokyo 108-8001 (JP)
(74) Representative: Vossius & Partner
(86) International application number: PCT/JP2012/050648
(87) International publication number: WO 2012/102103

(57) **Abstract**

The present invention is capable of decreasing network load and serialization/de-serialization processing load even when large volumes of queries are forwarded. An information processing device: calculates a next key indicating the value closest to the value shown by a given key, from among keys indicating values contained in the range specified in the aforementioned query; specifies a one key from stored keys which indicate a certain value on the basis of the magnitude relation between the values indicated by the next key and said stored keys; specifies a forwarding destination node identifier on the basis of the value of the one key; calculates a forwarding destination final key indicating the bounds of the range of the next keys on the basis of the value indicated by the one key; and forwards to the device identified by the forwarding destination node identifier the query and the forwarding destination final key.

## Description

### TECHNICAL FIELD

The present invention relates to a method for forwarding a query in the structured P2P (Peer-to-Peer).

### BACKGROUND ART

According to the structured P2P (Peer-to-Peer), a node included in a system shares queries which are inputted from an external system, and then processes the query.

The node corresponds to a program installed in an memory which is included in a device having CPU (Central Processing Unit) and the memory. A computer which includes this CPU works as the node, which forwards data and the query and makes the memory store the data and the query, by CPU's reading the program and carrying out the program. By a value (key) which is generated by use of a hash function on the basis of the query, a node to which the query should reach is determined.

The structured P2P defines a key space corresponding to a space structured by values which the key can hold. Then, a part of the key space is assigned to each node as a range (key range). A key, which is assigned to a certain node, is called an assigned key of the node, and a range of the assigned key is called an assigned key range. A key which indicates the smallest value in the assigned key range is called a smallest assigned key, and a key which indicates the largest value in the assigned key range is called a largest assigned key.

The query inputted from the external system is sent to the node, to which the key generated on the basis of the query is assigned, through nodes whose number is not smaller than 0. There is a possibility that a plurality of keys may be generated on the basis the query. In this case, the query is forwarded to each node to which each of the plural keys is assigned. To specify the node through which the query is forwarded depends on a routing protocol. When a certain query is sent to a node to which a certain key is assigned, the key is called a destination key of the node.

When data is inputted from the external system, a certain node generates a key on the basis of the data and sends the data to a certain node to which the generated key is assigned. Therefore, the data and the query which generate the same certain key are sent to the node to which the certain key is assigned. In the case that each node judges that the data and the query are identical each other perfectly, it is enough to have a configuration that a value, which is calculated by use of the hash function whose input is the data, is defined as the key, and a value which is calculated by use of the hash function whose input is data designated by the query is defined as the key. As a result, the data and the query which are identical each other perfectly reach to the same node.

A method for routing the query inputted from the external system to a node which should process the query is disclosed (for example, refer to a non-patent literature 1).

An operation according to the art disclosed in the non-patent literature 1 will be described in the following. Each node of a P2P system maps attribute values, which indicate respective values of multi-dimensional attributes, to a key, which indicates one-dimensional data, by use of the space-filling curve. When the query is inputted, each node generates a key range, which is a set of the keys each of which indicates a certain value, on the basis of the query.

Next, the node determines a forwarding destination node of the query so that the query may be sent to a certain node to which a smallest key in the key range is assigned. Then, the node sends the query to the forwarding destination node.

The query is sent to the node, to which the key is assigned, through the nodes whose number is not smaller than 0. The forwarding destination node of the query receives the query and processes the received query. In the case of processing the query, when the largest value in the key range of the query is larger than the largest value in the key range assigned to the node, the node forwards the received query to a successor. A successor of a certain node means a node to which a key indicating a value obtained by adding 1 to the largest value among the respective values of the assigned keys of the certain node is assigned. A process that the certain node forwards the query to the successor of the certain node is repeated until the largest value in the key range which is generated on the basis of the query becomes smaller than the largest value in the key range assigned to the node.

### [Related technical literature]

### [Non-patent literature]

[Non-patent literature 1] Prasanna Ganesan et al., 'One torus to rule them all: Multi-dimensional queries in p2p systems,' In WebDB '04: Proceedings of the 7th International Workshop on the Web and Databases, pages 19-24, New York, NY, USA, 2004. ACM Press.
[Non-patent literature 2] Christian Bohm et al., 'XZ-Ordering: A Space-Filling Curvefor Objects with Spatial Extension,' Proceedings of the 6th International Symposium on Advances in Spatial Databases, pages 75-90, July 20-23 and 1999.
[Non-patent literature 3] Ion Stoica et al., 'Chord: A Scalable Peer-to-peer Lookup Service for Internet Applications,' In Proceedings of the 2001 Conference on Applications, Technologies, Architectures, and Protocols For Computer Communications. SIGCOMM '01. ACM, New York, NY, 149-160.

### SUMMARY OF THE INVENTION

### [PROBLEM TO BE SOLVED BY THE INVENTION]

According to the art disclosed in the non-patent literature 1, the key range is generated on the basis of the query, and is forwarded to each node together with the query. When each node forwards the key range, the node serializes the key range, and when each node receives the key range, the node de-serialize the key range. Therefore, according to the art which is disclosed in the non-patent literature 1, when large volumes of the queries are forwarded, a network load, a load of a serialization processing and a load of a de-serialization processing are heavy.

An object of the present invention is to provide an information processing device, an information processing method and an information processing program which are capable of decreasing the network load, the load of the serialization and the load of the de-serialization processing even when large volumes of queries are forwarded.

### [MEANS FOR SOLVING A PROBLEM]

A first information processing device according to an exemplary embodiment includes: a receiving means which receives a query which specifies a range of a certain value; a path management means which stores a key which indicates a certain value; a next key calculating means which calculates a next key which is corresponding to a key indicating a value closest to a value indicated by a given key, out of keys indicating values which are contained in the range specified by the query; a query forwarding control means which specifies a one key out of the keys, which the next path management means stores, on the basis of a magnitude relation between the value indicated by the next key and each of the values of the keys, and specifics a forwarding destination node identifier which is corresponding to an identifier of a device to be identified on the basis of a value of the one key; and a final key calculating means which calculates a forwarding destination final key which the device identified by the forwarding destination node identifier can calculate and which is corresponding to a key indicating bounds of a range of the next key, out of the keys, which the path management means stores, on the basis of the value which is indicated by the one key and which is corresponding to the forwarding destination node identifier, wherein
the query forwarding control means forwards the query and the forwarding destination final key to the device which is identified by the forwarding destination node identifier.

A first information processing system according to an exemplary embodiment of the present invention includes at least one information processing device, wherein the information processing device includes: a receiving unit which receives a query which specifies a range of a certain value; a path management unit which stores a key which indicates a certain value; a next key calculating unit which calculates a next key, which is corresponding to a key indicating a value closest to a value indicated by a given key, out of keys indicating values contained in the range specified by the query; a query forwarding control unit which specifies a one key out of the keys, which the next path management unit stores, on the basis of a magnitude relation between the value indicated by the next key and each of the values of the keys, and specifies a forwarding destination node identifier which is corresponding to an identifier of a device to be identified on the basis of a value of the one key; and a final key calculating unit which calculates a forwarding destination final key, which the device identified by the forwarding destination node identifier can calculate and which is corresponding to a key indicating bounds of a range of the next key, out of the keys, which the path management unit stores, on the basis of the value indicated by the one key which is corresponding to the forwarding destination node identifier, wherein the query forwarding control unit forwards the query and the forwarding destination final key to the device which is identified by the forwarding destination node identifier.

A first information processing method according to an exemplary embodiment includes: receiving a query which specifies a range of a certain value; storing a key which indicates a certain value; calculating a next key, which is corresponding to a key indicating a value closest to a value indicated by a given key, out of keys indicating values contained in the range specified by the query; specifying a one key out of the stored keys on the basis of a magnitude relation between the value indicated by the next key and each of the values of the stored keys, and specifying a forwarding destination node identifier which is corresponding to an identifier of a device to be identified on the basis of a value of the one key calculating a forwarding destination final key, which the device identified by the forwarding destination node identifier can calculate and which is corresponding to a key indicating bounds of a range of the next key, out of the stored keys on the basis of the value indicated by the one key which is corresponding to the forwarding destination node identifier; and forwarding the query and the forwarding destination final key to the device which is identified by the forwarding destination node identifier.

A first information processing program according to an exemplary embodiment makes a computer carry out: a process of receiving a query which specifies a range of a certain value; a process of storing a key which indicates a certain value; a process of calculating a next key, which is corresponding to a key indicating a value closest to a value indicated by a given key, out of keys indicating values contained in the range specified by the query; a process of specifying a one key out of the stored keys on the basis of a magnitude relation between the value indicated by the next key and each of the values of the stored keys, and specifying a forwarding destination node identifier which is corresponding to an identifier of a device to be identified on the basis of a value of the one key; a process of calculating a forwarding destination final key, which the device identified by the forwarding destination node identifier can calculate and which is corresponding to a key indicating bounds of a range of the next key, out of the stored keys on the basis of the value indicated by the one key which is corresponding to the forwarding destination node identifier; and a process of forwarding the query and the forwarding destination final key to the device which is identified by the forwarding destination node identifier.

A first recording medium according to an exemplary embodiment records an information processing program which makes a computer carry out: a process of receiving a query which specifies a range of a certain value; a process of storing a key which indicates a certain value; a process of calculating a next key, which is corresponding to a key indicating a value closest to a value indicated by a given key, out of keys indicating values contained in the range specified by the query; a process of specifying a one key out of the stored keys on the basis of a magnitude relation between the value indicated by the next key and each of the values of the stored keys, and specifying a forwarding destination node identifier which is an identifier of a device to be identified on the basis of a value of the one key; a process of calculating a forwarding destination final key, which the device identified by s the aid forwarding destination node identifier can calculate and which is corresponding to a key indicating bounds of a range of the next key, out of the stored keys on the basis of the value indicated by the one key which is corresponding to the forwarding destination node identifier; and a process of forwarding the query and the forwarding destination final key to the device which is identified by the forwarding destination node identifier.

### [EFFECT OF THE INVENTION]

As one example of an effect according to the present invention, it is possible to decrease the network load, the serialization processing load and the de-serialization processing load even when large volumes of queries are forwarded..

### BRIEF DESCRIPTION OF THE DRAWINGS

Fig. 1 is a block diagram showing composition of an information processing system according to a first exemplary embodiment of the present invention.
Fig. 2 exemplifies a two-dimensional attribute.
Fig. 3 exemplifies a procedure that the information processing system maps a multi-dimensional attribute to a key, which indicates one-dimensional information, by use of the space-filling curve.
Fig. 4 is a block diagram showing a configuration of a node according to the first exemplary embodiment of the present invention.
Fig. 5 exemplifies composition that a path management unit stores a largest assigned key of each node.
Fig. 6 shows an example of calculating a next key.
Fig. 7 is a block diagram showing a program storing device which the node includes.
Fig. 8 is a flowchart exemplifying an outline of an operation of the node according to the first exemplary embodiment of the present invention.
Fig. 9 exemplifies a message which a query forwarding control unit creates.
Fig. 10 is a flowchart exemplifying an outline of an operation of a next key calculating unit of the node according to the first exemplary embodiment of the present invention.
Fig. 11 is a flowchart exemplifying an outline of an operation in a process of a next key search which is carried out by the next key calculating unit of the node according to the first exemplary embodiment of the present invention.
Fig. 12 shows a specific example of the operation in the next key search which is carried out by the next key calculating unit.
Fig. 13 shows a specific example of index i.
Fig. 14 is a flowchart exemplifying an outline of an operation in a process of a x area search which is carried out by the next key calculating unit of the node according to the first exemplary embodiment of the present invention.
Fig. 15 is a flowchart exemplifying an outline of an operation in a process of a y area search which is carried out by the next key calculating unit of the node according to the first exemplary embodiment of the present invention.
Fig. 16 is a flowchart exemplifying an outline of an operation in a process of a next key generation which is carried out by the next key calculating unit of the node according to the first exemplary embodiment of the present invention.
Fig. 17 is a schematic diagram showing a Hilbert curve which the key calculating unit specifies.
Fig. 18 is a block diagram showing a configuration of a node according to a second exemplary embodiment of the present invention.
Fig. 19 is a flowchart exemplifying an outline of an operation of the node according to the second exemplary embodiment, which is different from the operation of the node according to the first exemplary embodiment, out of the operation of the node according to the second exemplary embodiment.
Fig. 20 is a block diagram showing a configuration of a node according to a third exemplary embodiment of the present invention.
Fig. 21 exemplifies a smallest assigned key table which a smallest assigned key holding unit holds.
Fig. 22 is a flowchart exemplifying an outline of an operation of the node according to the third exemplary embodiment, which is different from the operation of the node according to the first exemplary embodiment, out of the operation of the node according to the third exemplary embodiment.
Fig. 23 is a diagram for explaining a specific example of the operation of the node according to the third embodiment of the present invention.
Fig. 24 is a block diagram showing a configuration of a node according to a fourth exemplary embodiment of the present invention.
Fig. 25 exemplifies information which a path management unit stores.
Fig. 26 is a block diagram showing a configuration of a node which is included in an information processing system according to a fifth exemplary embodiment of the present invention.
Fig. 27 is a block diagram showing a program storing device which the node includes.

### EXEMPLARY EMBODIMENTS FOR CARRYING OUT OF THE INVENTION

An exemplary embodiment for carrying out the present invention will be described in detail with reference to a drawing. Here, in each drawing and each exemplary embodiment described in this specification, a common code is assigned to components which have the same function.

### [First exemplary embodiment]

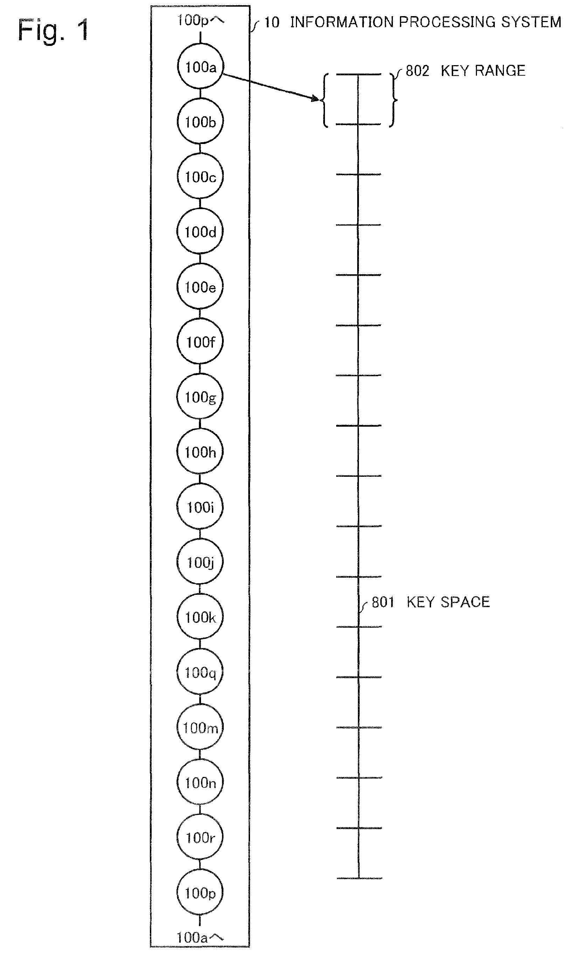

Fig. 1 is a block diagram showing composition of an information processing system 10 according to a first exemplary embodiment of the present invention.

Referring to Fig. 1, the information processing system 10 according to the first exemplary embodiment of the present invention includes a plurality of nodes 100a to 100r. Hereinafter, a node 100 may be described as a representative of the nodes 100a to 100r in some cases. Each node 100 is connected with, at least one of other nodes 100 so as to be able to communicate with it.

In the information processing system 10 according to the first exemplary embodiment, each node 100 which receives a query forwards a final key, which indicates bounds of a key for which each node 100 must carry out a search with own responsibility, to a node together with the query. That is, each node has no necessity to send the key range. Here, the search means to search for a key which is corresponding to the query.

In the case that each node 100 forwards the key range, a sending side node must serialize data of each key which is included in the key range. Moreover, in the case that a receiving side node receives the serialized data, the receiving side node must de-serialize the received data.

Therefore, the information processing system 10 according to the first exemplary embodiment can decrease the network load more. Furthermore, the information processing system 10 according to the first exemplary embodiment can decrease the serialization processing load and the de-serialization processing load of each node 100.

Hereinafter, the information processing system 10 according to the first exemplary embodiment will be described in detail.

The information processing system 10 maps a multi-dimensional attribute to a key, which indicates a certain value, by use of the space-filling curve.

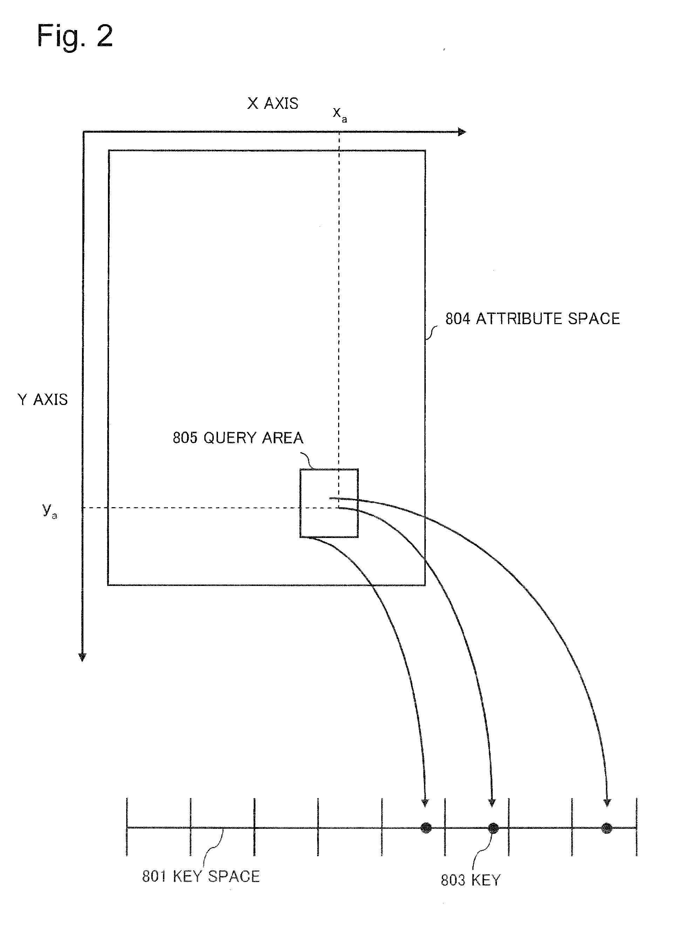

Fig. 2 exemplifies a two-dimensional attribute. A combination of respective attribute values of the two-dimensional attribute is mapped to a certain key 803. For example, in Fig. 2, a combination of certain attribute values (xa, ya), which is included in a query area 805 corresponding to, at least, a part of an attribute space 804 which is a space structured by the two-dimensional attribute, is mapped to the certain key 803.

In Fig. 1, the information processing system 10 shown in Fig. 1 includes the nodes 100a to 100r. Moreover, a certain key range 802. which is a part of a one-dimensional key space 801, is assigned to each node 100.

In this specification, data may include a plurality of attributes. For example, the data may include a 'latitude' attribute and a 'longitudinal' attribute as location information. The attribute includes an attribute name which is information to identify a classification of the attribute, and a value which is assigned to the attribute name (attribute value). For example, the 'latitude' attribute includes an attribute name 'latitude', and an attribute value '30 degrees 40 minutes north latitude'.

In this specification, the query may be information which designates a range of the attribute value. For example, the query may be information which designates a range of each attribute value such as a range from 35 degrees 30 minutes north latitude to 35 degrees 50 minutes north latitude and from 139 degrees 40 minutes east longitude to 139 degrees 50 minutes east longitude. Data '35 degrees 40 minutes north latitude and 139 degrees 46 minutes east longitude' is included in the range designated by the above-mentioned query. Therefore, the data is identical with the query 'from 35 degrees 30 minutes north latitude to 35 degrees 50 minutes north latitude and from 139 degrees 40 minutes east longitude to 139 degrees 50 minutes east longitude'.

Next, a procedure that the information processing system 10 maps a multi-dimensional attribute to a key, which indicates one-dimensional information, by use of the space-filling curve will be described.

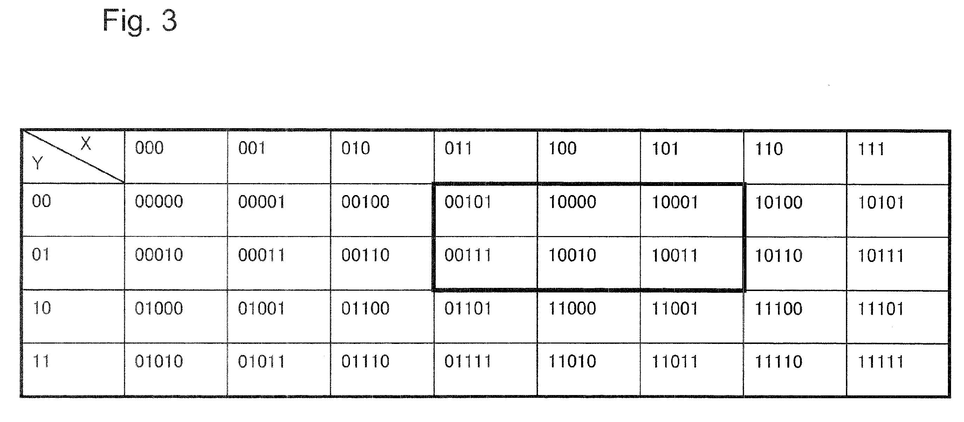

Fig. 3 exemplifies the procedure that the information processing system 10 maps the multi-dimensional attribute to the key, which indicates the one-dimensional information, by use of the space-filling curve.

According to the example, a two-dimensional attribute, which includes an attribute x and an attribute y, is mapped to a key which indicates one-dimensional information. Firstly, an attribute x subkey range [011, 101] and an attribute y subkey range [00, 01] are generated on the basis of an attribute value range of the attribute x and an attribute value range of the attribute y. Here, the subkey is a value which is used for generating the key.

According to the example shown in Fig. 3, the subkey of the attribute x has 3 bits width. The subkey of the attribute y has 2 bits width. In this example, the key is a bit stream which is generated by lining the bits of the subkeys of the attribute x and the bits of subkeys of the attribute y alternately per the bit for each combination of a set of the subkeys {011, 100, 101} included in the attribute x subkey range, and a set of the subkeys {00, 01} included in the attribute y subkey range. For example, by lining bits of '011' and '00' alternately per the bit, '00101' is generated. By carrying out the above mentioned process, 2 multiplied by 3 (= 6) keys are generated on the basis of the attribute value range of the attribute x and the attribute value range of the attribute y. In this specification, to generate a key on the basis of '011' and '00' is described as 'to generate a key on the basis of (011, 00)'.

The above-mentioned key generation method is exemplified merely. Any method is applicable as far as the method can generate a key on the basis of a combination of bits included in a set of subkeys.

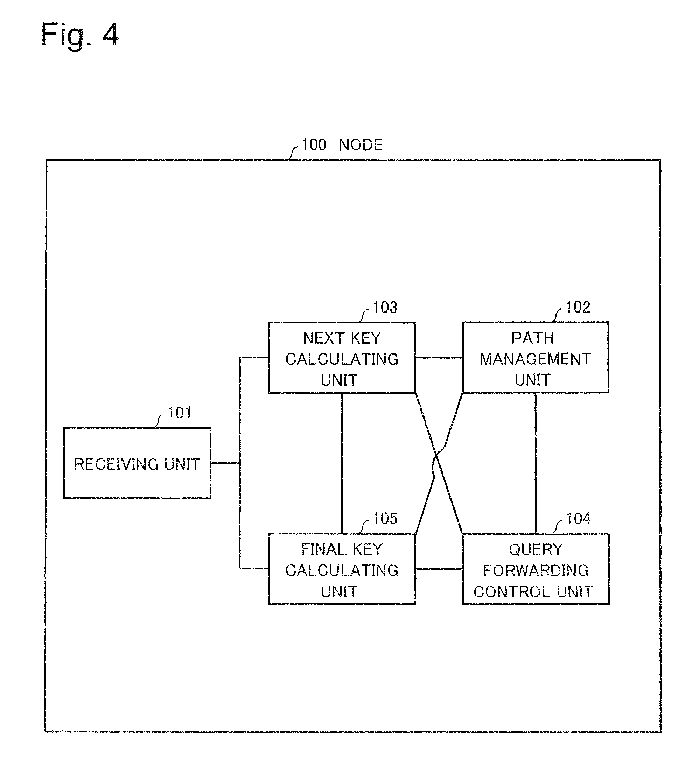

Fig. 4 is a block diagram showing a configuration of the node 100 according to the first exemplary embodiment of the present invention.

Referring to Fig. 4, the node 100 according to the first exemplary embodiment of the present invention includes a receiving unit 101, a path management unit 102, a next key calculating unit 103, a query forwarding control unit 104 and a final key calculating unit 105.

### ===== Receiving unit 101====

The receiving unit 101 receives information, which includes at least a query, from an external system, which is not shown in the figure, or another node 100. The receiving unit 101 transfers the received query to the next key calculating unit 103 which will be described later.

The receiving unit 101 judges whether receiving a forwarding destination final key together with the query. The forwarding destination final key is corresponding to the final key which indicates bounds of the key to which each node 100 receiving the query must carry out the search with own responsibility.

### ===Path management unit 102===

The path management unit 102 associates a key and an identifier, which is able to identify a node 100 corresponding to a next forwarding destination which is used in order to reach a node 100 assigned the key, and stores. When the path management unit 102 receives one key (destination key), the path management unit 102 compares a value which the destination key indicates, and a value which each of the stored keys indicates, and specifies one identifier on the basis of a magnitude relation between these values, and returns the one identifier.

A key, which is assigned to a node 100, is called an assigned key of the node, and a range of the assigned key is called an assigned key range A key which indicates the smallest value in the assigned key range is called a smallest assigned key, and a key which indicates the largest value in the assigned key range is called a largest assigned key. The node 100 may store information which indicates the assigned key range. The information, which indicates the assigned key range and which the node 100 stores, may be the smallest assigned key and the largest assigned key, or the information may be all the keys included in the assigned key range.

The key may be information which can identify one node out of the node 100. Moreover, the key may be an identifier or a node address which can identify the node 100. Moreover, the key may be information which is corresponding uniquely to an identifier or a node address which can identify a certain node.

Specifically, the path management unit 102 may associates the node address which is the identifier of the node 100 and the largest assigned key of the node 100, and stores the node address and the largest assigned key which are in a state of association.

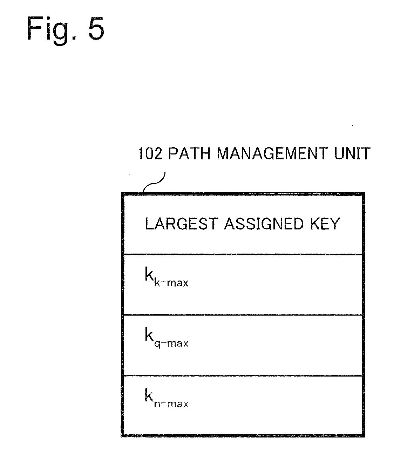

In the case that the key is the identifier of each node 100, the path management unit 102 may store the largest assigned key of each node 100 as the node address of each node 100. That is, in this case, the path management unit 102 may store the largest assigned key of each node 100 as shown in Fig. 5. Then, the largest assigned key is corresponding to the identifier which can identify each node 100. On the basis of the largest assigned key which the path management unit 102 stores, the path management unit 102 may calculate a node address of a node corresponding to the largest assigned key

The path management unit 102 receives a certain destination key. For example, the path management unit 102 may specify a key, which indicates a value larger than and closest to a value indicated by the destination key, out of the keys stored in the path management unit 102. In this case, in the case that the path management unit 102 does not store the key which indicates the value larger than the value indicated by the destination key, the path management unit 102 may specify a key which indicates the smallest value. Then, the path management unit 102 specifies an identifier of the node 100 which is associated with the specified key.

Moreover, the path management unit 102 may specify, for example, a key indicating the largest value, which is not larger than the value indicated by the destination key, out of the keys stored in the path management unit 102. In this case, in the case that the path management unit 102 does not store the key indicating the value which is not larger than the value indicated by the destination key, the path management unit 102 may specify the key which indicates the smallest value.

The path management unit 102 may specify a node address of the node 100 on the basis of the identifier of the node 100. Moreover, the identifier of the node 100 may be the node address of the node 100. According to the first exemplary embodiment, it is assumed that the identifier which can identify the node 100 is the node address of the node 100.

In order to generate information which indicates this path, each node 100 notifies another node 100 of, at least, the own node address and the own largest assigned key. The path management unit 102 of each node 100 generates information (path table), which indicates a path connecting with another node 100, on the basis of the notified information, and stores the generated information. This path table is corresponding to the above-mentioned information which indicates association between a certain key and an identifier which identifies a node 100 corresponding to a next forwarding destination for reaching a node 100 assigned the key.

### === Next key calculating unit 103 ===

When the receiving unit 101 receives a query, the next key calculating unit 103 calculates a next key on the basis of the largest assigned key of the own node 100, and the query.

A next key of a certain key k is specified as follows. The next key of the key k is corresponding to a key, which indicates a value larger than and closest to a value indicated by the key k, among the keys each of which indicates a predetermined value. Here, each key which indicates the predetermined value is specified on the basis of a combination of the respective attribute values. Each attribute value is corresponding to the attribute value which is included in the attribute value range of the attribute included in the query. However, in the case that the value which the key k indicates is larger than all of the above-mentioned predetermined values, the next key of the key k is corresponding to a key which indicates the smallest value among the above-mentioned predetermined values.

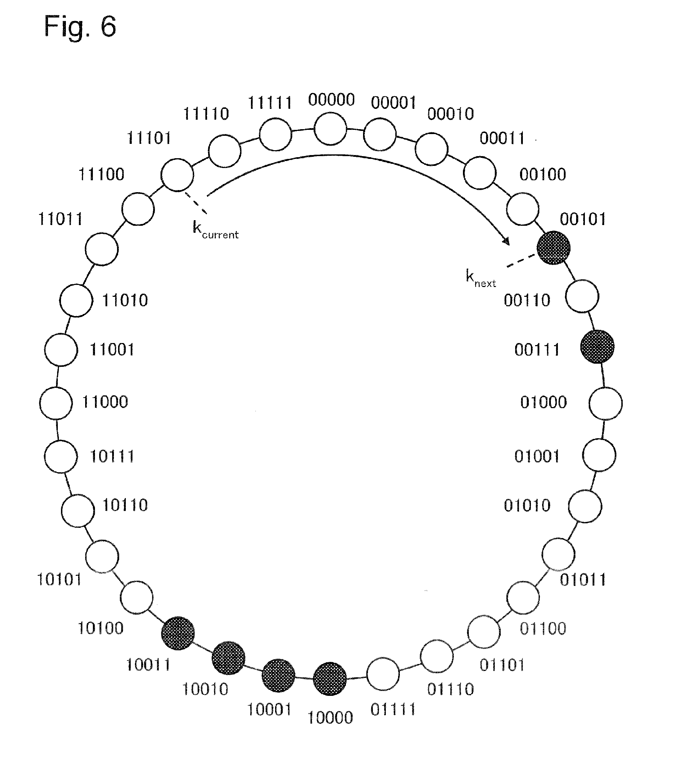

Fig. 6 shows an example of the next key calculating unit 103 calculating the next key. Fig. 6 shows an example of a key which has 5 bits width. It is assumed that keys, which are generated on the basis of the range of the latitude and the range of the longitude designated by the query, are six keys of '00101', '00111' and [10000, 10011]. In Fig. 6, it is assumed that the next key calculating unit 103 calculates a next key (denoted as knext) of a certain key (current key denoted as kcurrent). For example, in the case that kcurrent is '11101", knext of kcurrent is specified as '00101' which is obtained by clockwise rotation on the figure. Similarly, in the case that kcurrent is '00101', knext is specified as '00111'. Similarly, in the case that kcurrent is '10001', knext is specified as '10010'.

In this exemplary embodiment, a key, which indicates a value obtained by adding 1 to a value of a key indicating the largest value ('11111' in Fig. 6) among the values which the keys can hold, is corresponding to a key indicating the smallest value ('00000' in Fig. 6) among the values which the keys can hold. Moreover, a key, which indicates a value obtained by subtracting 1 from the value of the key indicating the smallest value ('00000' in Fig. 6) among the values which the keys can hold, is corresponding to the key indicating the largest value ('11111' in Fig. 6) among the values which the keys can hold. Moreover, in this exemplary embodiment, in the case that the value indicating the key is smaller than 0 or larger than number of all nodes, the value may be converted to a congruent value which is obtained by carrying out modulo N arithmetic (N is number of all nodes). The value which indicates the key and which is smaller than 0, or the value which is larger than the number of all nodes means a value larger than the largest value among the values which the keys can hold.

Moreover, when the next key calculating unit 103 receives a check target key k from the query forwarding control unit 104 which will be described later, the next key calculating unit 103 calculates the next key out of the keys, which are generated on the basis of the attribute value range of each attribute included in the query, on the basis of the check target key k. Then, the next key calculating unit 103 transfers the calculated next key to the query forwarding control unit 104.

### === Query forwarding control unit 104===

The query forwarding control unit 104 receives the next key which the next key calculating unit 103 calculates. Then, the query forwarding control unit 104 judges whether the received next key is identical with any key among the largest assigned key to the final key of the own node 100 or not. Here, when the receiving unit 101 receives the query, the final key calculating unit 105, which will be described later, specifies the final key of the own node 100.

In the case that the query forwarding control unit 104 judges that the next key is identical with either key among the largest assigned key to the final key of the own node 100, the query forwarding control unit 104 carries out the following process.

First, the query forwarding control unit 104 refers to the path management unit 102 and acquires a node address 'addr' which is corresponding to the next key. Then, the query forwarding control unit 104 transfers the node address 'addr' to the final key, calculating unit 105 which will be described later.

The query forwarding control unit 104 transfers the check target key k which is corresponding to the final key calculated by the next key calculating unit 103. When the next key calculating unit 103 receives the check target key k, the next key calculating unit 103 calculates a new next key on the basis of the check target key k and transfers the new next key to the query forwarding control unit 104.

On the other hand, in the case that the query forwarding control unit 104 judges that the next key is not identical with any keys among the largest assigned key to the final key of the own node 100, the query forwarding control unit 104 carries out the following process. That is, the query forwarding control unit 104 creates a message including the query and the forwarding destination final key, which is one component of each pair included in a forwarding list generated by the final key calculating unit 105, for each pair in the forwarding list. Then, the query forwarding control unit 104 sends the generated message to a node which is specified by the forwarding destination node address corresponding to the other component of the pair. Description on the forwarding list will be given later.

### === Final key calculating unit 105===

In the case that the final key calculating unit 105 judges that the receiving unit 101 receives the query but does not receive the forwarding destination final key, the final key calculating unit 105 carries out the following process. That is, the final key calculating unit 105 calculates a key, which indicates a value obtained by subtracting 1 from the smallest assigned key of the own node 100, as the final key. In the case that a value indicated by the smallest assigned key of the own node 100 is the smallest value among the values which all the keys can hold, the final key calculating unit 105 specifies a key, which indicates the largest value among the values which all the keys can hold, as the final key.

Moreover, in the case that the final key calculating unit 105 judges that the receiving unit 101 receives the forwarding destination final key together with the query, the final key calculating unit 105 specifies the received forwarding destination final key as the final key of the own node 100.

In the case that the final key calculating unit 105 receives the node address 'addr' from the query forwarding control unit 104, the final key calculating unit 105 carries out the following process. That is, the final key calculating unit 105 refers to the path management unit 102. Then, out of the node addresses which the path management unit 102 stores, the final key calculating unit 105 specifies a node address 'next', to which a key whose distance from the next key is the shortest is assigned, except for 'addr'. That is, the final key calculating unit 105 specifies a node address, which is associated with a key indicating a value larger than and closest to the value indicated by the key associated with the node address 'addr', as 'next'. Description on the distance will be given later.

Next, the final key calculating unit 105 refers to the path management unit 102 and specifies the key, which is associated with the node address 'next', as the check target key k.

The final key calculating unit 105 defines 'addr' and the check target key k as the forwarding destination node address and the forwarding destination final key respectively, and interpolates a pair of them in the forwarding list. The forwarding list includes, as its component, a pair of the forwarding destination node address which indicates a node address to which the query should be forwarded, and the forwarding destination final key which is corresponding to the final key sent together with the query.

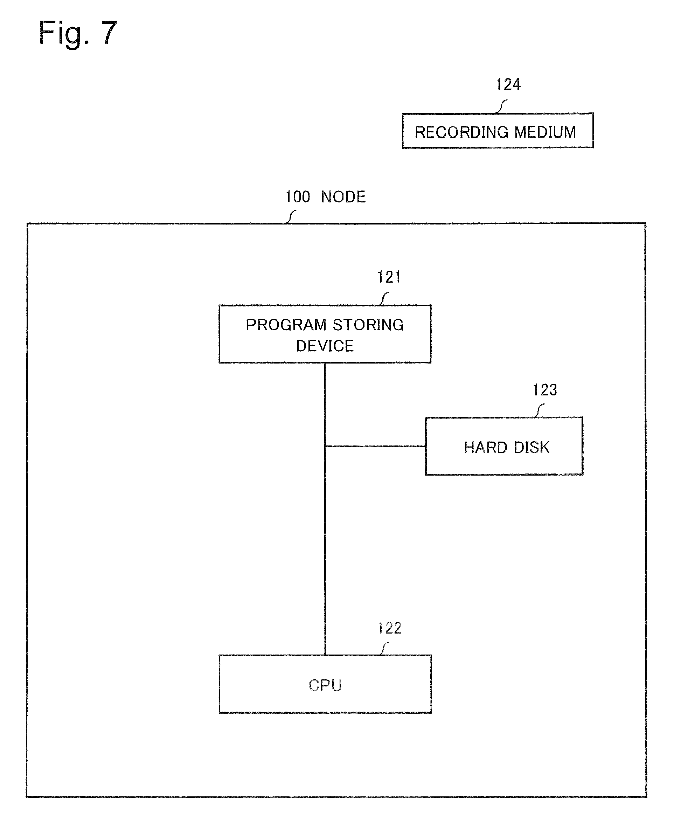

The receiving unit 101, the path management unit 102, the next key calculating unit 103, the query forwarding control unit 104 and the final key calculating unit 105 are realized, for example, by CPU which works on the basis of a program (information processing program). The receiving unit 101, the path management unit 102, the next key calculating unit 103, the query forwarding control unit 104 and the final key calculating unit 105 may be realized by one common CPU. In this case, the program is stored, for example, in a program storing device 121 (refer to Fig. 7) which the node 100 includes. It is enough that CPU 122 reads the program and works as the receiving unit 101, the path management unit 102, the next key calculating unit 103, the query forwarding control unit 104 and the final key calculating unit 105 on the basis of the program.

Moreover, a recording media (or storage media), which records a code of the above-mentioned program, may be provided to the node 100, and the node 100 may read the code of the program which is stored in the recording media, and carry out the program. That is, the present invention includes a recording media 124 recording software (information processing program), which is carried out by the node 100 according to the first exemplary embodiment, temporarily or non-temporarily.

The path management unit 102 may be realized by a storage device such as a hard disk 123.

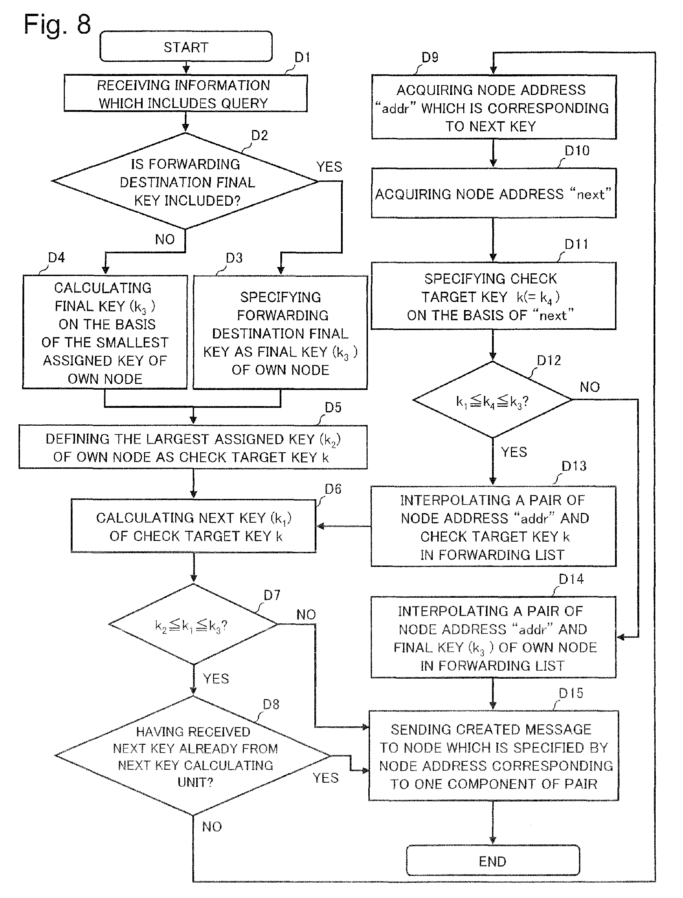

Next, an operation of the node 100 according to the first exemplary embodiment of the present invention will be exemplified. Fig. 8 is a flowchart exemplifying an outline of the operation of the node 100 according to the first exemplary embodiment of the present invention.

The receiving unit 101 receives information, which includes at least the query, from an external system which is not shown in the figure or another node 100 (Step D1). Then, the receiving unit 101 judges whether the received information includes the forwarding destination final key or not (Step D2). In the case that the receiving unit 101 judges that the received information includes the forwarding destination final key ('Yes' in Step D2), the following process is carried out. That is, the final key calculating unit 105 specifies the received forwarding destination final key as the final key of the own node 100 (Step D3). Then, the operation of the node 100 proceeds to Step D5. On the other hand, in the case that the receiving unit 101 judges that the received information does not include the forwarding destination final key ('No' in Step D2), the final key calculating unit 105 carries out the following process. That is, the final key calculating unit 105 calculates the key, which indicates the value obtained by subtracting 1 from the smallest assigned key of the own node, as the final key of the own node 100 (Step D4). Then, the operation of the node 100 proceeds to Step D5.

The next key calculating unit 103 specifies the largest assigned key of the own node 100 as the check target key k (Step D5). Then, the next key calculating unit 103 calculates the next key of the check target key k on the basis of the query which the receiving unit 101 receives (Step D6).

Then, the query forwarding control unit 104 judges whether a value (k1), which is indicated by the next key calculated by the key calculating unit 103, exists between a value (k2) which the largest assigned key of the own node 100 indicates, and a value (k3) which the final key indicates (Step D7).

That 'k1 exists between k2 and k3' means that a value obtained by adding 1 repeatedly to the value k2 may reach the value k1 before reaching the value k3 in some cases. Here, in the case that the value obtained by adding 1 repeatedly to k2 reaches the largest value MAX among the values which the keys can hold, a value which is obtained by adding 1 to MAX is regarded as the smallest value MIN among the values which the keys can hold.

In Step D7, the final key is either the final key which is received together with the query in Step D1 or the final key which the final key calculating unit 105 calculates in Step D4.

In the case that the query forwarding control unit 104 judges that the value indicated by the next key exists between the value which the largest assigned key of the own node 100 indicates, and the value which the final key indicates ('Yes' in Step D7), the query forwarding control unit 104 carries out the following process. That is, the query forwarding control unit 104 judges whether the query forwarding control unit 104 has received the next key of the check target key k already from the key calculating unit 103 or not (Step D8). In this case, every time when the query forwarding control unit 104 receives the next key, the query forwarding control unit 104 may store the next key.

In the case that the query forwarding control unit 104 judges that the query forwarding control unit 104 has received the next key of the check target key k already from the key calculating unit 103 ('Yes' in Step D8), the process of the query forwarding control unit 104 proceeds to Step D15 which will be described later.

On the other hand, in the case that the query forwarding control unit 104 judges that the query forwarding control unit 104 has not received the next key of the check target key k yet from the key calculating unit 103 ('No' in Step D8), the query forwarding control unit 104 carries out the following process. That is, the query forwarding control unit 104 refers to the path management unit 102, and acquires the node address 'addr' which is corresponding to the next key (Step D9). The query forwarding control unit 104 transfers the acquired node address 'addr' to the final key calculating unit 105.

The final key calculating unit 105 acquires the node address 'next' of the node, to which a key whose distance from the next key is the shortest is assigned, except for 'addr' out of the nodes which the path management unit 102 stores (Step D10).

Here, the distance is specified on the basis of the routing protocol. In the case that, for example, Chord is applied as the routing protocol, the distance is defined as a clockwise distance between the nodes. When an inequality k1 < k2 is satisfied, the clockwise distance from the key k1 to the key k2 is equal to k2 - k1. Fig. 6 shows a specific example of calculating the clockwise distance. Fig. 6 shows an example in which a key having 5 bits width is used. For example, a distance from a key '00101' (5 in the decimal notation) to a key '00111' (7 in the decimal notation) is 7 - 5 = 2. In the case that the inequality k1 < k2 is not satisfied, the distance is calculated by a numerical formula MAX - k1 + k2 + 1. MAX means the largest value among the values which the keys can hold. According to the example shown in Fig. 6, a value of MAX is '11111' (31 in the decimal notation). For example, a distance from kcurrent (29 in the decimal notation) to knext (5 in the decimal notation) is 31 - 29 + 5 + 1 = 8.

A method for acquiring the above-mentioned node address 'next' will be described in the following. For example, it is assumed that the assigned key ranges of the nodes 100a, 100b and 100c are [0, 10], [20, 30] and [40, 50] respectively. The distance from a key assigned to the node 100a to a key assigned to the node 100b is calculated to be 20 - 10 = 10. Moreover, the distance from the key assigned to the node 100a to a key assigned to the node 100c is calculated to be 40 - 10 = 30. Therefore, a node, to which the key whose distance from the key assigned to the node 100a is the shortest is assigned, is the node 100b out of the nodes 100b and 100c.

The assigned key of each node indicates a continuous value and is exclusive. therefore, if the query forwarding control unit 104 or the path management unit 102 stores any one of the assigned keys of the node 100 per the node 100, it is possible to calculate a positional relation between these nodes 100.

The final key calculating unit 105 specifies a key, which is stored in association with the node address 'next', as a new check target key k (Step D11).

The final key calculating unit 105 judges whether a value (k4), which the new check target key k indicates, exists between the value (k1) which is indicated by the next key calculated by the next key calculating unit 103, and the value (k3) which the final key indicates (Step D12).

In the case that the final key calculating unit 105 judges that the value, which the new check target key k indicates, exists between the value which is indicated by the next key calculated by the next key calculating unit 103, and the value which the final key indicates ('Yes' in Step D12), the final key calculating unit 105 carries out the following process. That is, the final key calculating unit 105 interpolates a pair, whose one component is the forwarding destination node address to which the node address 'addr' corresponds and whose another component is the forwarding destination final key to which the check target key k corresponds, in the forwarding list (Step D13). Then, the operation of the node 100 proceeds to Step D6.

On the other hand, in the case that the final key calculating unit 105 judges that the value, which the new check target key k indicates, does not exist between the value which is indicated by the next key calculated by the next key calculating unit 103, and the value which the final key indicates ('No' in Step D12), the final key calculating unit 105 carries out the following process. That is, the final key calculating unit 105 interpolates a pair, whose one component is the forwarding destination node address to which the node address 'addr' corresponds and whose another component is the forwarding destination final key to which the final key of the own node 100 corresponds, in the forwarding list (Step D14). Then, the operation of the node 100 proceeds to Step D15.

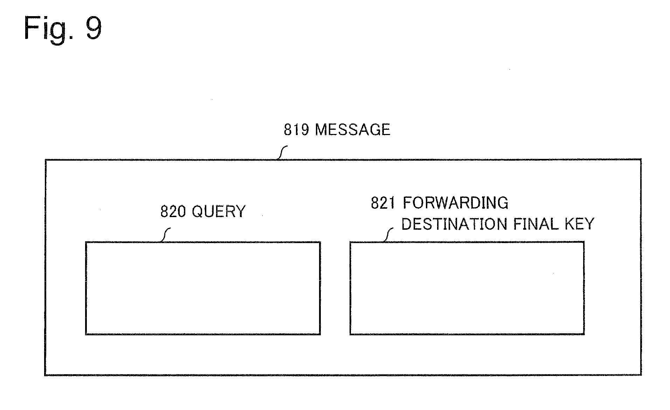

In the case that it is judged in a process of Step D7 that the value which the next key indicates does not exist between the value which the smallest assigned key of the own node indicates, and the value which the final key indicates ('No' in Step D7), the query forwarding control unit 104 carries out the following process. That is, the query forwarding control unit 104 creates a message, which has structure shown in Fig. 9, per the pair which is included in the forwarding list generated by the final key calculating unit 105, on the basis of the forwarding destination final key which is one element of the pair, and the corresponding query. Fig. 9 exemplifies a message 819 which includes a query 820 and a forwarding destination final key 821. Then, the query forwarding control unit 104 sends the created message to the node 100 specified by the forwarding destination node address which is the other element of the pair (Step D15).

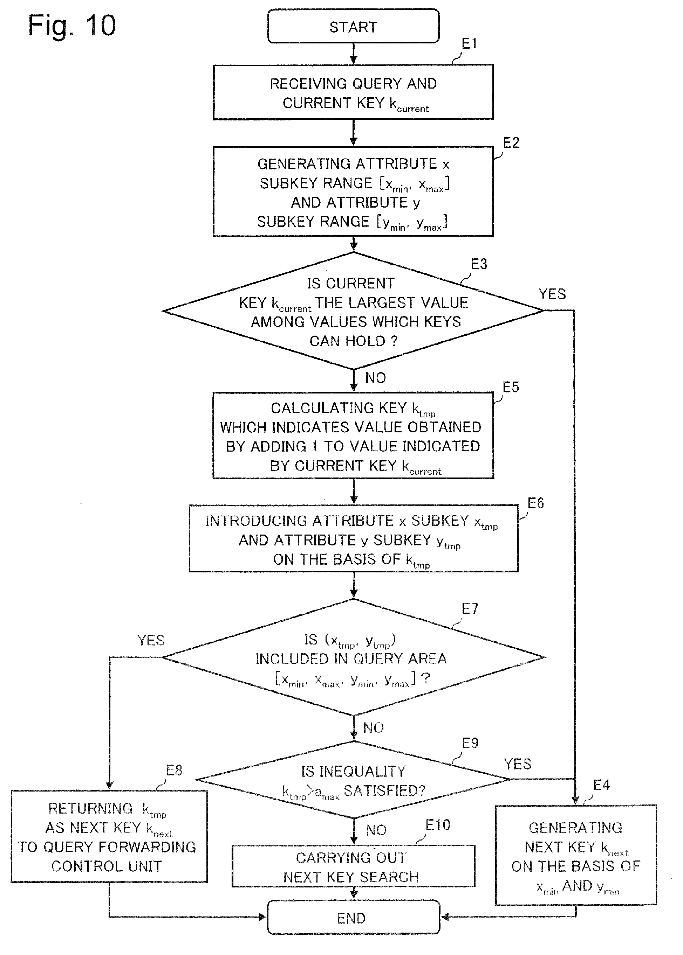

Fig. 10 is a flowchart exemplifying an outline of an operation of the next key calculating unit 103 of the node 100 according to the first exemplary embodiment of the present invention.

The next key calculating unit 103 receives the query and a current key kcurrent which is a certain key (Step E1). Then, the next key calculating unit 103 generates an attribute x subkey range [xmin, xmax] and an attribute y subkey range [ymin, ymax] on the basis of the attribute value range of the attribute x and the attribute value range of the attribute y which are included in the query (Step E2). Here, a rectangle specified on the basis of the attribute x subkey range and the attribute y subkey range is called a query area and is denoted as [xmin, xmax, ymin, ymax].

The next key calculating unit 103 judges whether the current key kcurrent indicates the largest value among the values which the keys can hold (Step E3). In the case that the next key calculating unit 103 judges that the next key indicates the largest value among the values which the keys can hold ('Yes' in Step E3), the next key calculating unit 103 generates a key on the basis of xmin and ymin. Then, the next key calculating unit 103 calculates the generated key as the next key knext (Step E4). Then, the process of the next key calculating unit 103 is completed. In the case of the example shown in Fig. 6, the largest value among the values which the key can hold is '11111'.

In the case that the next key calculating unit 103 judges that the next key does not indicate the largest value among the values which the keys can hold ('No' in Step E3), the next key calculating unit 103 calculates a key ktmp indicating a value which is obtained by adding 1 to the value indicated by the current key kcurrent (Step E5). ktmp is a candidate for the next key.

The next key calculating unit 103 introduces an attribute x subkey xtmp and an attribute y subkey ytmp on the basis of ktmp (Step E6). For example, in the case that ktmp is '11110', xtmp is introduced as '110' on the basis of odd number bit of the key. Moreover, ytmp is introduced as '11' on the basis of even number bit of the key.

Then, the next key calculating unit 103 generates a key amax on the basis of (xmax, ymax). The key amax indicates the largest value out of keys which are generated on the basis of the attribute x subkey range [xmin, xmax] and the attribute y subkey range [ymin, ymax].

Next, the next key calculating unit 103 judges whether (xtmp, ytmp) is included in the query area [xmin, xmax, ymin, ymax] or not (Step E7). In the case that the next key calculating unit 103 judges that (xtmp, ytmp) is included in the query area [xmin, xmax, ymin, ymax] ('Yes' in Step E7), the next key calculating unit 103 calculates ktmp as the next key knext (Step E8). On the other hand, in the case that the next key calculating unit 103 judges that (xtmp, ytmp) is not included in the query area [xmin, xmax, ymin, ymax] ('No' in Step E7), the next key calculating unit 103 judges whether an inequality ktemp > amax is satisfied or not (Step E9). In the case that the next key calculating unit 103 judges that the inequality ktemp > amax is satisfied ('Yes' in Step E9), the process of the next key calculating unit 103 proceeds to Step E4. Here, this case is corresponding to a case that there is no key, which indicates a value larger than the value indicated by ktemp, among the candidates for the next key.

On the other hand, in the case that the next key calculating unit 103 judges that the inequality ktemp > amax is not satisfied ('No' in Step E9), the next key calculating unit 103 carries out a next key search (Step E10). A specific example of the next key search will be described later.

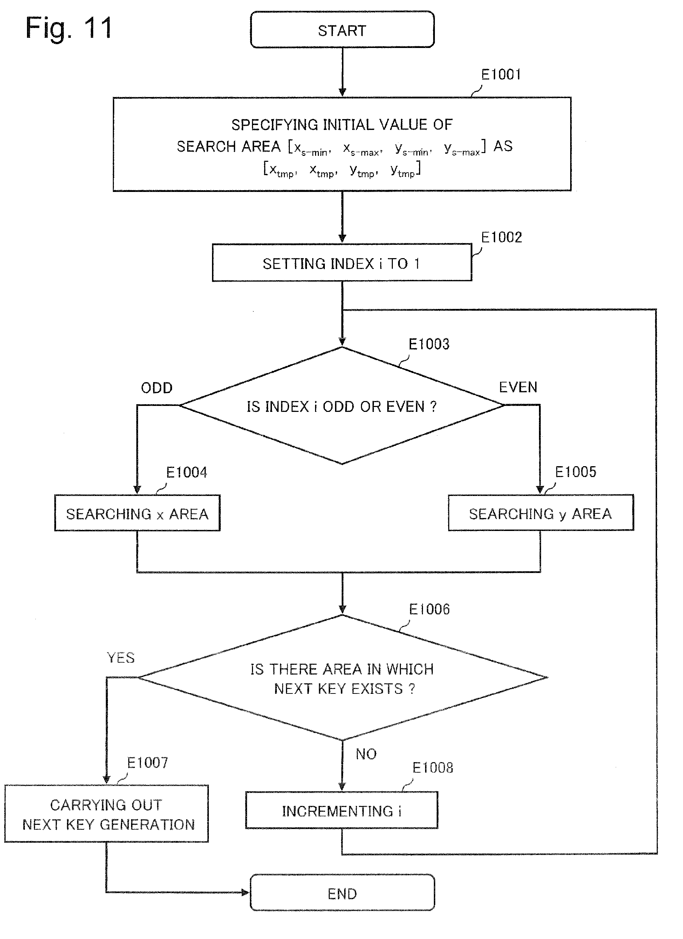

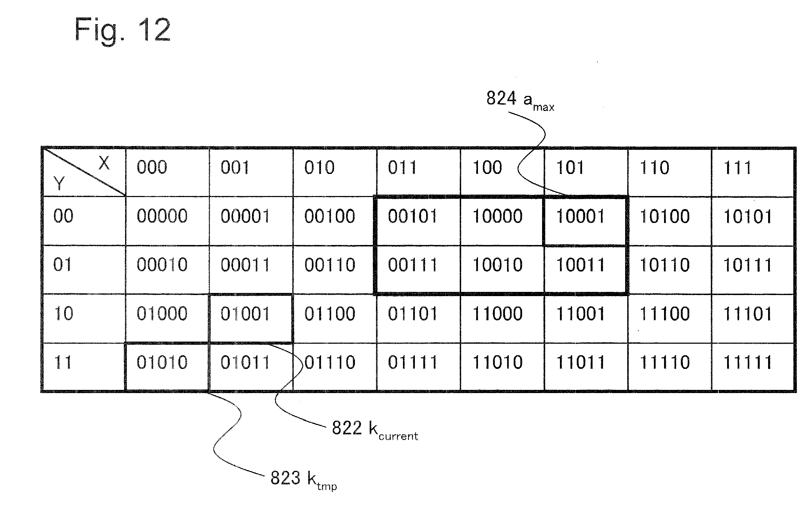

Fig. 11 is a flowchart exemplifying an outline of an operation in the process of the next key search, which is carried out by the key calculating unit 103 of the node 100 in the above-mentioned step E10, according to the first exemplary embodiment of the present invention. Fig. 12 shows a specific example of the operation in the next key search which is carried out the next key calculating unit 103. Here, the operation in the process of the next key search shown in Figs. 11 to 16 is corresponding to an example in which XZ-Order is used as the space-filling curve. An example in which another curve is used as the space-filling curve will be described later.

Referring to Fig. 12, a current key kcurrent 822 is '01001'. In this case. ktmp 823 is a value '01010' which is obtained by adding 1 to kcurrent. The next key calculating unit 103 introduce the attribute x subkey xtmp = '000' and the attribute y subkey ytmp = '11' on the basis of ktmp. A point (000, 11) on the key space, which is specified by two subkeys, is not included in a query area [011, 101, 00, 01]. amax 824 is a key '10011` which is found on the basis of (xmax. ymax) = (101, 01). Here, since ktmp is '01010', the inequality ktmp > amax is not satisfied. Then, the next key calculating unit 103 carries out the process of the next key search which will be described in the following.

It is a feature that an area to be searched (search area) is expanded recursively until the next key is found in the search area. In this example, the search area is denoted as [xs-min, xs-max, ys-min, ys-max].

The next key calculating unit 103 specifies an initial value of [xs-min, xs-max, ys-min, ys-max] as [xtmp, xtmp, ytmp, ytmp] (Step E1001). According to the example shown in Fig. 12, the search area is [000, 000, 11, 11].

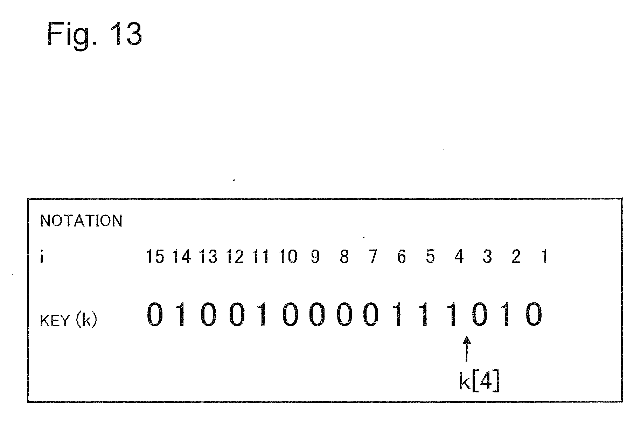

The next key calculating unit 103 sets an index i to 1 (Step E1002). The index i expresses number of digits which are read from a low rank bit of a bit stream included in the key as shown in Fig. 13. The next key calculating unit 103 judges whether the index i is odd or even (Step E1003).

The next key calculating unit 103 expands the search area by incrementing the index i from 1 to number of bits which compose the key. In the case that i is odd (odd in Step E1003), the next key calculating unit 103 carries out a x area search (Step E1004). A specific example of the x area search will be described later. On the other hand, in the case that i is even (even in Step E1003), the next key calculating unit 103 carries out a y area search (Step E1005). A specific example of the y area search will be described later.

The next key calculating unit 103 judges whether there is an area, in which the next key exists, by carrying out the x area search or the y area search (Step E1006). In the case that the next key calculating unit 103 judges that there is the area in which the next key exists ('Yes' in Step E1006), the next key calculating unit 103 carries out a next key generation (Step E1007). A specific example of the next key generation will be described later. On the other hand, in the case that the next key calculating unit 103 judges that there is no area in which the key exists ('No' in Step E1006), the next key calculating unit 103 increments the index i (Step E1008). The, the process of the next key calculating unit 103 proceeds to Step E1003.

An initial value of the index i is 1. Accordingly, the next key calculating unit 103 carries out the x area search firstly. The x area search means a process to expand the search area in a x-axis direction, and to judge whether the next key is included in an increment area. The increment area means an area which is obtained by subtracting the search area before expansion from the search area after expansion. Moreover, the y area search means a process to expand the search area in a y-axis direction, and to judge whether the next key is included in the increment area.

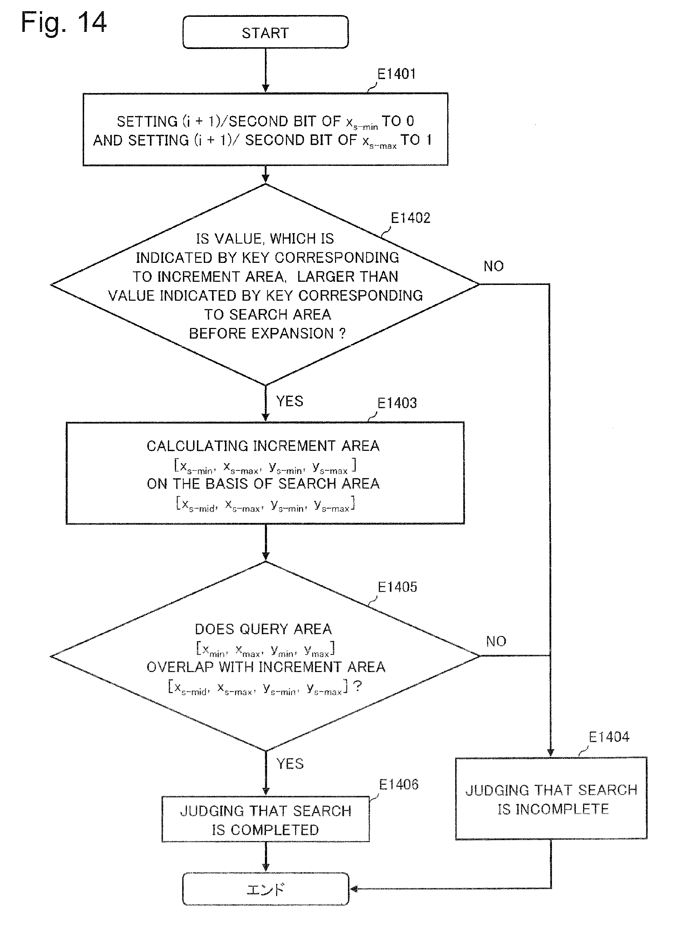

Fig. 14 is a flowchart exemplifying an outline of an operation in the process of the x area search, which is carried out by the next key calculating unit 103 of the node 100 in the above-mentioned step E1004, according to the first exemplary embodiment of the present invention.

The next key calculating unit 103 sets a (i+1)/2nd bit of xs-min to 0 and sets a (i+1)/2nd bit of xs-max to 1 out of the search area [xs-min, xs-max, ys-min, ys-max] (Step E1401). By carrying out the process, the search area expands in the x-axis direction, and the size of the search area becomes two times larger than one before expansion.

According to the example shown in Fig. 12, in the case that the index i is 1, the next key calculating unit 103 updates (i+1)/2nd bits, that is, first bits of xs-min and xs-max of the search area [xs-min, xs-max, ys-min, ys-max] = [000, 000, 11, 11]. Then, the key calculating unit 103 updates the search area to [000, 001, 11, 11].

Next, the next key calculating unit 103 judges whether a value, which a key corresponding to the increment area indicates, is larger than a value which a key corresponding to the search area before expansion indicates or not (Step E1402). Specifically, the next key calculating unit 103 judges whether a (i+1)/2nd bit of xtmp is 0 or not. If the (i+1)/2nd bit of xtmp is 0, the value which the key corresponding to the increment area indicates is larger than the value which the key corresponding to the search area before expansion indicates.

For example, referring to Fig. 12, in the case that the search area is expanded to [000, 001, 11, 11] from [000, 000, 11, 11], [001, 001, 11, 11] is corresponding to the increment area. In this case, the key '01010' corresponding to the increment area is larger than the key '01010' corresponding to the search area before expansion. That the key corresponding to the increment area is larger than the key corresponding to the search area before expansion can be introduced from the judgment that the (i+1)/2nd bit, that is, the first bit of xtmp '000' is 0.

In the case that the next key calculating unit 103 judges that the value, which the key corresponding to the increment area indicates, is larger than the value which the key corresponding to the search area before expansion indicates ('Yes' in Step E1402), the next key calculating unit 103 carries out the following process. That is, the next key calculating unit 103 calculates an increment area [xs-mid, xs-max, ys-min, ys-max] on the basis of the search area [xs-min, xs-max, ys-min, ys-max] (Step E1403). Here, xs-mid has a value which is obtained by setting the (i+1)/2nd bit of xs-min to 1.

For example, according to the example shown in Fig. 12, a case that i = 1, xs-min = '000', and xs-max = '001' is assumed Then, the next key calculation part 103 sets the first bit of xs-min to 1 and defines the set xs-min as xs-mid. That is, the next key calculating unit 103 calculates xs-mid as '001'.

On the other hand, in the case that the next key calculating unit 103 judges that the value, which the key corresponding to the increment area indicates, is not larger than the value which the key corresponding to the search area before expansion indicates ('No' in Step E1402), the next key calculating unit 103 messages that 'Search is incomplete.'. Then, the next key calculating unit 103 ends the process of the x area search (step E1404).

The next key calculating unit 103 judges whether the query area [xmin, xmax, ymin, ymax] overlaps with the increment area [xs-mid, xs-max, ys-min, ys-max] (Step E1405). In the case that the next key calculating unit 103 judges that the query area overlaps with the increment area ('Yes' in Step E1405), the next key calculating unit 103 messages that the next key is a value which exists in the increment area, and ends the process of the x area search (Step E1406).

On the other hand, in the case that the next key calculating unit 103 judges that the query area and the increment area do not overlap each other ('Yes' in Step E1405), the next key calculating unit 103 messages that the search is incomplete, and ends the process of the x area search (Step E1404). According to the example shown in Fig. 12, the query area [011, 101, 00, 01] does not overlap with the increment area [001, 001, 11, 11]. therefore, the next key calculating unit 103 judges that the area in which the next key exists is not found.

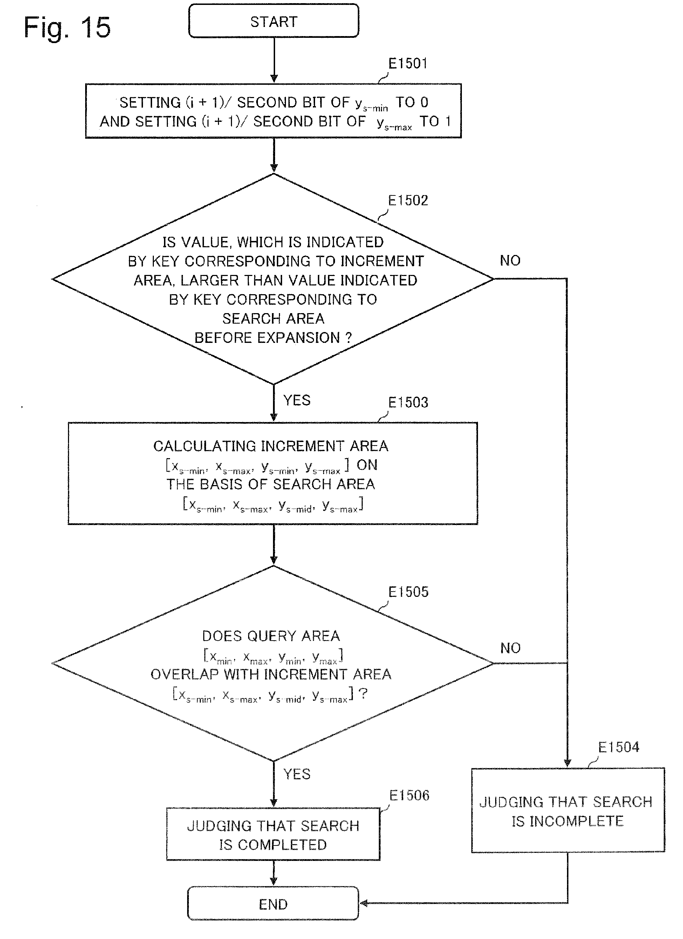

Fig. 15 is a flowchart exemplifying an outline of an operation in the process of the y area search, which is carried out by the next key calculating unit 103 of the node 100 in the above-mentioned Step E1004. according to the first exemplary embodiment of the present invention. The operation in the process of the y area search is similar to one of the x area search. Therefore, description on the operation is omitted.

According to the example shown in Fig. 12, in the case that the index i is equal to 1, the search becomes incomplete. Therefore, the next key calculating unit 103 increments the index i. After the increment, the index i is changed to 2 which is even. Therefore, the next key calculating unit 103 carries out the y area search. In the y area search, the search area is expanded to [000, 001, 10, 11] from [000, 001, 11, 11]. A key corresponding to the increment area is smaller than a key corresponding to the search area before expansion. Therefore, the next key calculating unit 103 judges that the area in which the next key exists is not found.

The next key calculating unit 103 carries out the x area search and the y area search alternately until the increment area overlaps with the query area.

For example, in the case that the index i is 5, the search area is expanded to [000, 111, 00, 11] from [000, 011, 00, 11]. The increment area [100, 111, 00, 11] overlaps with the query area [011, 101, 00, 01]. Therefore, the next key calculating unit 103 judges that the area in which the next key exists is found.

If the next key calculating unit 103 judges that the increment area in which the next key exists is found, the next key calculating unit 103 carries out the next key generation.

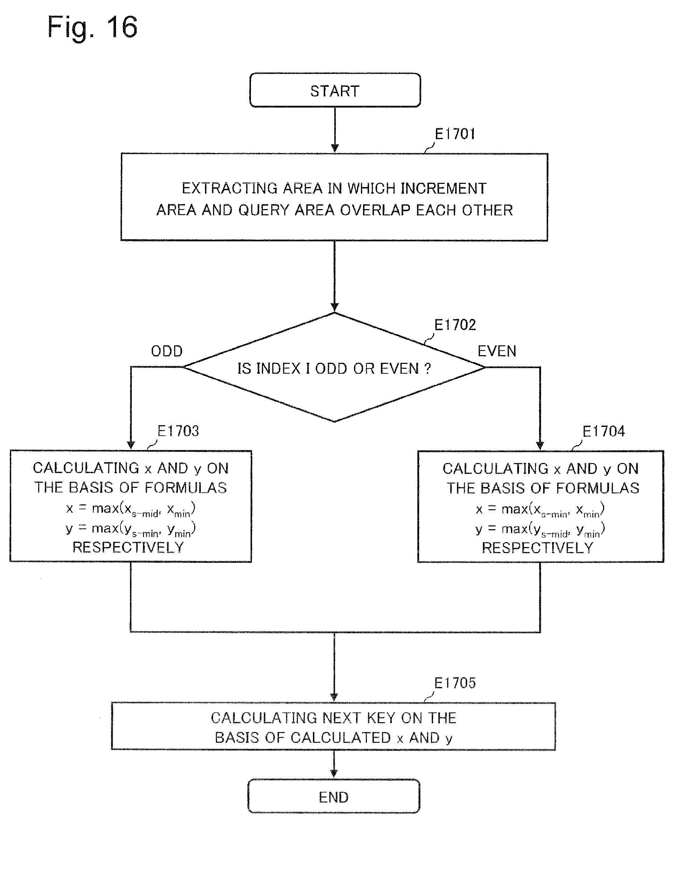

Fig. 16 is a flowchart exemplifying an outline of an operation in the process of the next key generation, which is carried out by the next key calculating unit 103 of the node 100 in the above-mentioned Step E1007, according to the first exemplary embodiment of the present invention.

First, the next key calculating unit 103 extracts an area where the increment area and the query area overlap each other (Step E1701). A key, which is generated on the basis of (smallest value on x axis, smallest value on y axis) of the extracted area, is corresponding to the next key. Specifically, the next key calculating unit 103 works as follows.

The next key calculating unit 103 judges whether the index i is even or odd (Step E1702). In the case that the index i is odd (odd in Step E1702), the next key calculating unit 103 specifies that the smallest value on the x axis is a larger value out of xs-mid and xmin. Moreover, the key calculating unit 104 specifies that the smallest value on the y axis is a larger value out of ys-min and ymin.

That is, in the case that the index i is odd, the key calculating unit 103 calculates that (smallest value on x axis, smallest value on y axis) is (larger value out of xs-mid and xmin, larger value out of ys-min and ymin) Step E1703). On the other hand, when the index i is even (even in Step E1702), the key calculating unit 103 calculates similarly that (smallest value on x axis, smallest value on y axis) is (larger value out of xs-min and xmin, larger value out of ys-mid and ymin) (Step E1704).

The next key calculating unit 103 calculates the next key on the basis of the smallest value on the x axis and the smallest value on the y axis (Step E1705). According to the example shown in Fig. 12, the next key calculating unit 103 calculates that (smallest value on x axis, Smallest value on y axis) is (100, 00). Therefore, a key '10000' which is generated on the basis of the value is corresponding to the next key.

An operation in the process of the next key search shown in Figs. 11 to 16 applies, as an example, the XZ-Order as the space-filling curve. Another curve may be applied as the space-filling curve. As the space-filling curve, for example, the Hilbert curve, the Gray cord, the Peano curve, the Z-mirror and the U-index, which are shown in a non-patent literature 2, may be applied. The next key calculating unit 103 changes appropriately the operation in the process of the next key search in Step E10 mentioned above on the basis of the space-filling curve which is applied.

For example, in the case that the Hilbert curve is used as the space-filling curve, the next key calculating unit 103 carries out the above-mentioned process of the next key search in Step E10 as follows.

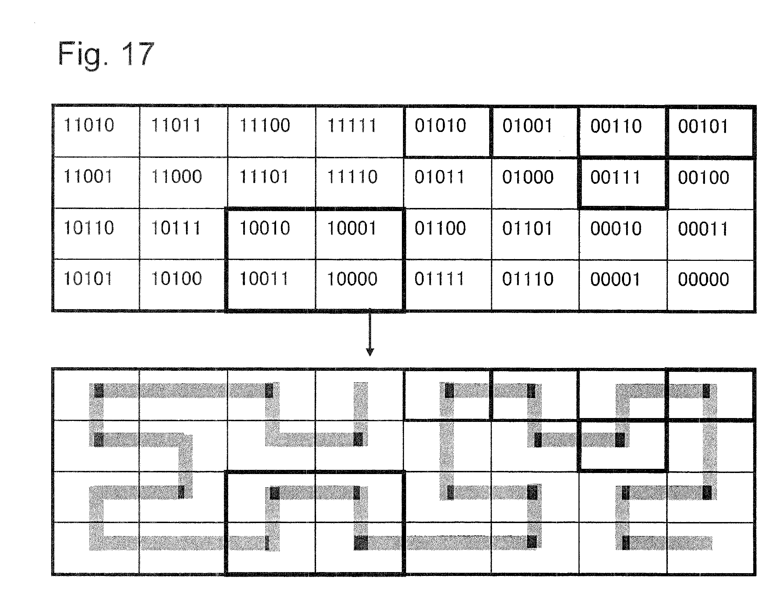

First, the next key calculating unit 103 calculates the Hilbert curve. Specifically, the next key calculating unit 103 specifies the largest value of number of bits of the attribute x subkey, and the largest value of number of bits of the attribute y subkey as an order of the Hilbert curve. Then, the next key calculating unit 103 specifies the Hilbert curve whose starting point is the smallest value among the values which the keys can hold. Fig. 17 is a schematic diagram showing the Hilbert curve which the key calculating unit 103 specifies.

Then, it is enough that the next key calculating unit 103 carries out the processes in E1001 to E1008 mentioned above on the basis of information shown in Fig. 17. The processes in Steps E1001 to E1008 according to the present example are similar to each process mentioned above.

In the information processing system 10 according to the first exemplary embodiment, each node 100 which receives the query sends the final key, which indicates the bounds of the key for which each node 100 has the responsibility, to the node 100 together with the query. That is, each node 100 has no necessity to send the key range.

In the case that each node 100 sends the key range, the sending side node must serialize data of each key which is included in the key range. Moreover, in the case that the receiving side node receives the serialized data, the receiving side node must de-serialize the received data. Therefore, it is possible that the information processing system 10 according to the first exemplary embodiment decreases the network load more. Furthermore, it is possible that the information processing system 10 according to the first exemplary embodiment decreases the serialization processing load and the de-serialization processing load

### [Second exemplary embodiment]

An information processing system 20 according to a second exemplary embodiment includes at least one node 200 like the information processing system 10 according to the first exemplary embodiment.

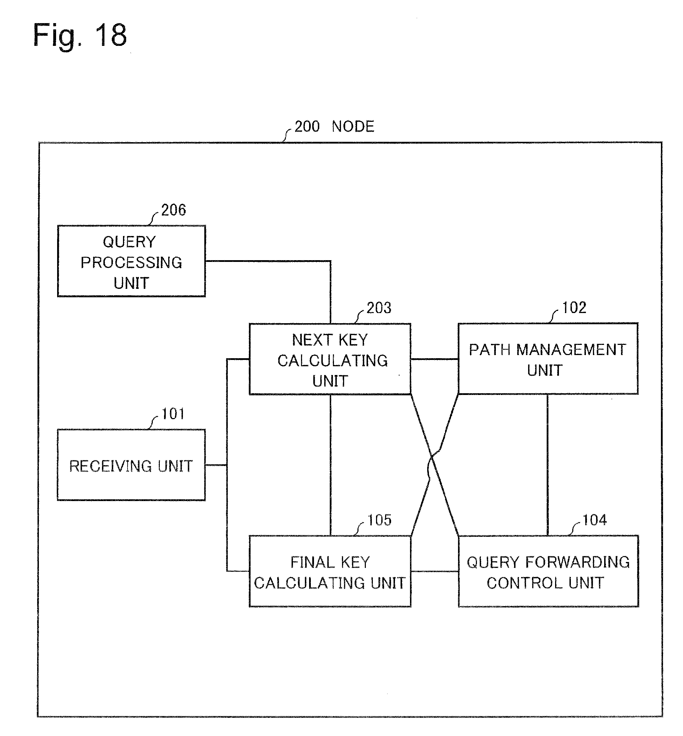

Fig. 18 is a block diagram showing a configuration of the node 200 according to the second exemplary embodiment of the present invention.

Referring to Fig. 18, the node 200 according to the second exemplary embodiment of the present invention includes the receiving unit 101, the path management unit 102. a next key calculating unit 203, the query forwarding control unit 104, the final key calculating unit 105 and a query processing unit 206.

The node 200 according to the second exemplary embodiment receives a query and processes the received query.

### ===Next key calculating unit 203===

The next key calculating unit 203 has the following function in addition to the function which the next key calculating unit 103 according to the first exemplary embodiment has.

When the receiving unit 101 receives a query, the next key calculating unit 203 calculates a next key on the basis of the received query and the smallest assigned key of the own node 200. Then, the next key calculating unit 203 judges whether the calculated next key is corresponding to the assigned key of the own node 200. In the case that the calculated next key is the assigned key of the own node 200, the key calculating unit 203 transfers the query to the query processing unit 206.

A method of the next key calculating unit 203 calculating the next key is similar to the method of the key calculating unit 103 calculating the next key.

### === Query processing unit 206===

The query processing unit 206 receives the query from the next key calculating unit 203 and processes the received query. The process carried out by the query processing unit 206 is different according to an application method of the information processing system 20. For example, it is possible to use the information processing system 20 as a Publish/Subscribe type system.

According to the Publish/Subscribe type system, an application registers a condition on data (condition on data is corresponding to query mentioned above) with the system in advance. When an event which satisfies the condition on data occurs, the event is notified to the application which registers the condition on data. It is called Publish that an event is inputted into the system, and it is called Subscribe that a condition on data is registered with the system.

In the second exemplary embodiment, for example, an user registers the condition on data (data condition) with the information processing system 20. Then, in the case that data which matches with the data condition is inputted into the information processing system 20, the data is reported to an external system which registers the data condition. In this case, the data condition is corresponding to the query. Therefore, the query processing unit 206 has a function means to store the query on a memory, and to judge whether the query and the data are identical each other when the data is inputted. Afterward, if the data is inputted to the query processing unit 206, the query processing unit 206 judges whether the data and the query, which is held on the memory, are identical each other. In the case that the query processing unit 206 judges that the data and the query are identical each other, the query processing unit 206 notifies a predetermined notification destination of the import.

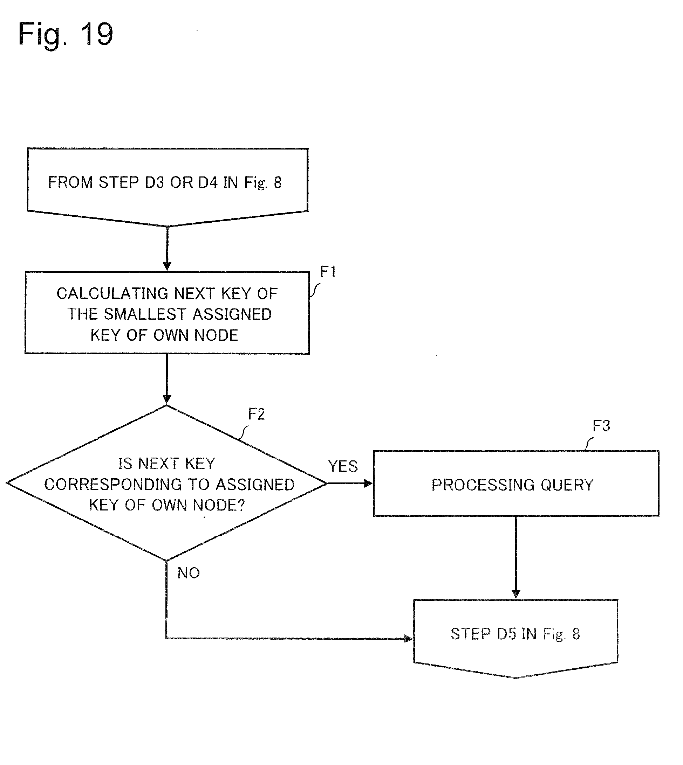

Fig. 19 is a flowchart exemplifying an outline of an operation of the node 200 according to the second exemplary embodiment, which is different from the operation of the node according to the first exemplary embodiment, out of the operation of the node 200 according to the second exemplary embodiment Description on a function to carry out the same operation as the operation of the node 100 according to the first exemplary embodiment out of the operation of the node 200 according to the second exemplary embodiment of the present invention is omitted.

The node 200 carries out processes which are similar to Steps D1 to D4 in Fig. 8. After completing the process in Step D3 or Step D4 shown in Fig. 8, the node 200 carries out a process in Step F1 shown in Fig. 19.

In Step F1 shown in Fig. 19, the next key calculating unit 203 calculates the next key of the smallest assigned key on the basis of the query which the receiving unit 101 receives, and the smallest assigned key of the own node 200 (Step F1). Then, the next key calculating unit 203 judges whether the calculated next key is corresponding to the assigned key of the own node 200 (Step F2).

In the case that the next key calculating unit 203 judges that the calculated next key is corresponding to the assigned key of the own node 200 ('Yes' in Step F2), the next key calculating unit 203 transfers the query to the query processing unit 206. The query processing unit 206 processes the query which is received from the next key calculating unit 203 (Step F3). Then, the operation of the node 200 proceeds to Step D8 shown in Fig. 8.

On the other hand, in the case that the next key calculating unit 203 judges that the calculated next key is not corresponding to the assigned key of the own node 200 ('No' in Step F2), the operation of the node 200 proceeds to Step D in Fig. 8. The following processes of the node 200 are similar to Steps D8 to D15 in Fig. 8.

The information processing system 20 according to the second exemplary embodiment receives the query. Then, on the basis of the judgment whether the next key, which is calculated on the basis of the received query, is corresponding to the assigned key of the own node 200, the information processing system 20 judges whether the query should be processed or not. That is, it is unnecessary that each node 100 sends the key range when processing the query.

Therefore, it is possible that the information processing system 20 according to the second exemplary embodiment decreases the network load. Furthermore, it is possible that the information processing system 20 according to the second exemplary embodiment decreases the serialization processing load and the de-serialization processing load of each node 200.

### [Third exemplary embodiment]

An information processing system 30 according to a third exemplary embodiment includes at least one node 300 like the information processing system 10 according to the first exemplary embodiment.

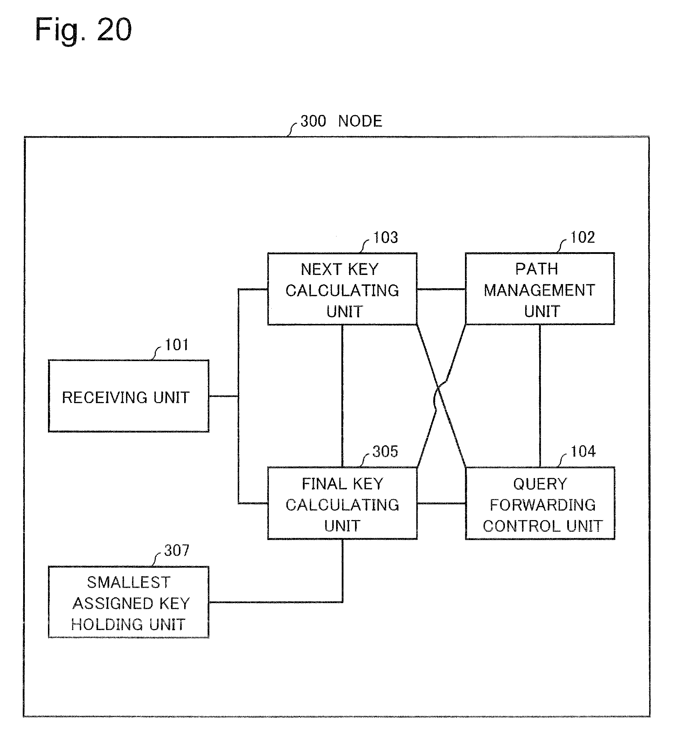

Fig. 20 is a block diagram showing a configuration of the node 300 according to the third exemplary embodiment of the present invention.

Referring to Fig. 20, the node 300 according to the third exemplary embodiment of the present invention includes the receiving unit 101, the path management unit 102, the next key calculating unit 103, the query forwarding control unit 104, a final key calculating unit 305 and a smallest assigned key holding unit 307.

### === Smallest assigned key holding unit 307===

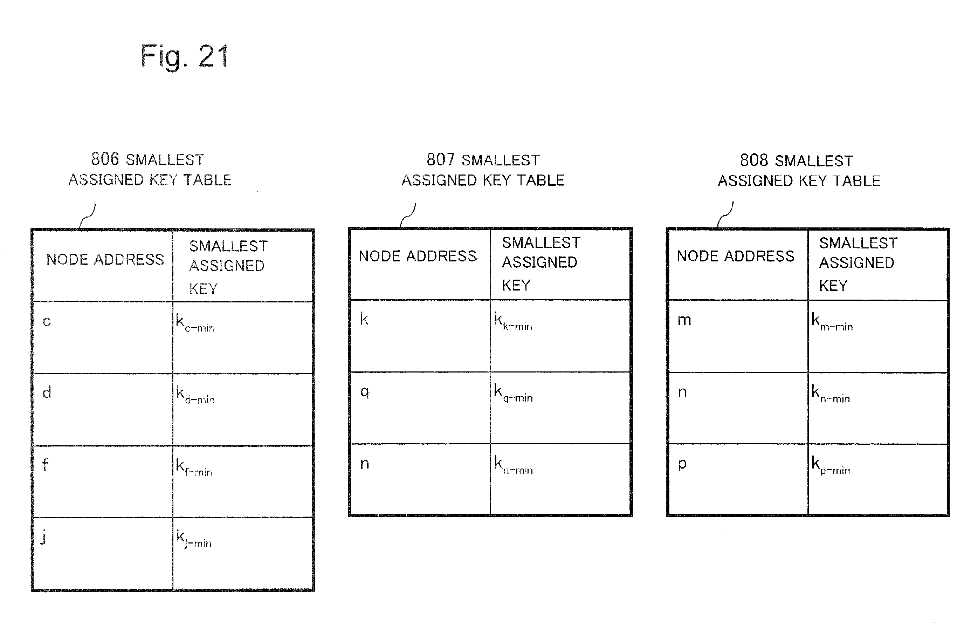

The smallest assigned key holding unit 307 associates a node address of another node 300 and a smallest assigned key of the node 300, and holds. Fig. 21 exemplifies a smallest assigned key table which the smallest assigned key holding unit 307 holds. Fig. 21 exemplifies a smallest assigned key table 806 which a node 300b holds, a smallest assigned key table 807 which a node 300j holds, and a smallest assigned key table 808 which a node 300m holds. Referring to Fig. 21, the smallest assigned key holding unit 307 of the node 300b stores that the smallest assigned keys of the nodes 300, which are corresponding to node addresses c, d, f and j, are kc-min, kd-min, kf-min and kj-min respectively.

When the path management unit 102 creates information which indicates a path with another node 300 (path table), a node 300 carries out a process of notifying a different node 300 of the node address. The smallest assigned key of the nod 300 may be included in the notification message. The smallest assigned key holding unit 307 associates the node address and the smallest assigned key which are included in the notification message received by the path management unit 102, and stores the node address and the smallest assigned key which are in a state of association. As a result, when the path management unit 102 creates the information which indicates the path with another node 300, the smallest assigned key holding unit 307 can store the smallest assigned key table.

### === Finial key calculating unit 305===

The final key calculating unit 305 receives the node address 'addr' from the query forwarding control unit 104. Then, the final key calculating unit 305, with reference to the path management unit 102, specifies a node address 'next', to which a key whose distance from the next key is the shortest is assigned, except for 'addr' out of the node addresses which the path management unit 102 stores. That is, the final key calculating unit 305 specifies a node address, which is associated with a key indicating a value larger than and closest to the value which the key associated with the node address 'addr' indicates, as the node address 'next'. Here, the distance is similar to the distance described in the first exemplary embodiment.

Next, the final key calculating unit 305, with reference to the smallest assigned key holding unit 307, specifies a key, which indicates a value obtained by subtracting a predetermined value from the value indicated by the key which is associated with the node address 'next', as the check target key k. The predetermined value may be, for example, 1.

The final key calculating unit 305 defines 'addr' and the check target key k as the forwarding destination node address and the forwarding destination final key respectively, and interpolates a pair of 'addr' and the check target key k in a forwarding list. The forwarding list is the same as one according to the first exemplary embodiment

In the case that the receiving unit 101 judges that the receiving unit 101 receives the query but does not receive the forwarding destination final key, the final key calculating unit 305 carries out the following process. That is, the final key calculating unit 305 calculates a key, which indicates a value obtained by subtracting, for example, 1 from the smallest assigned key of the own node 300, as the final key. In the case that a value indicated by the smallest assigned key of the own node 300 is the smallest value among the values which all the keys can hold, the final key calculating unit 305 specifies a key, which indicates the largest value among the values which all the keys can hold, as the final key.

Moreover, in the case that the receiving unit 101 judges that the receiving unit 101 receives the forwarding destination final key together with the query, the final key calculating unit 305 specifies the received forwarding destination final key as the final key of the own node 100.

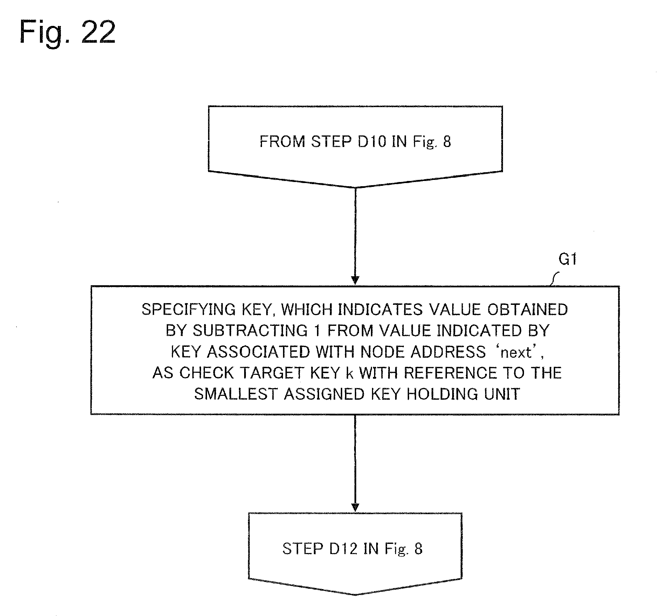

Fig. 22 is a flowchart exemplifying an outline of an operation of the node 300 according to the third exemplary embodiment, which is different from the operation of the node according to the first exemplary embodiment, out of the operation of the node 300 according to the second exemplary embodiment. Description on a function to carry out the same operation as the operation of the node 100 according to the first exemplary embodiment out of the operation of the node 300 according to the second exemplary embodiment of the present invention is omitted.

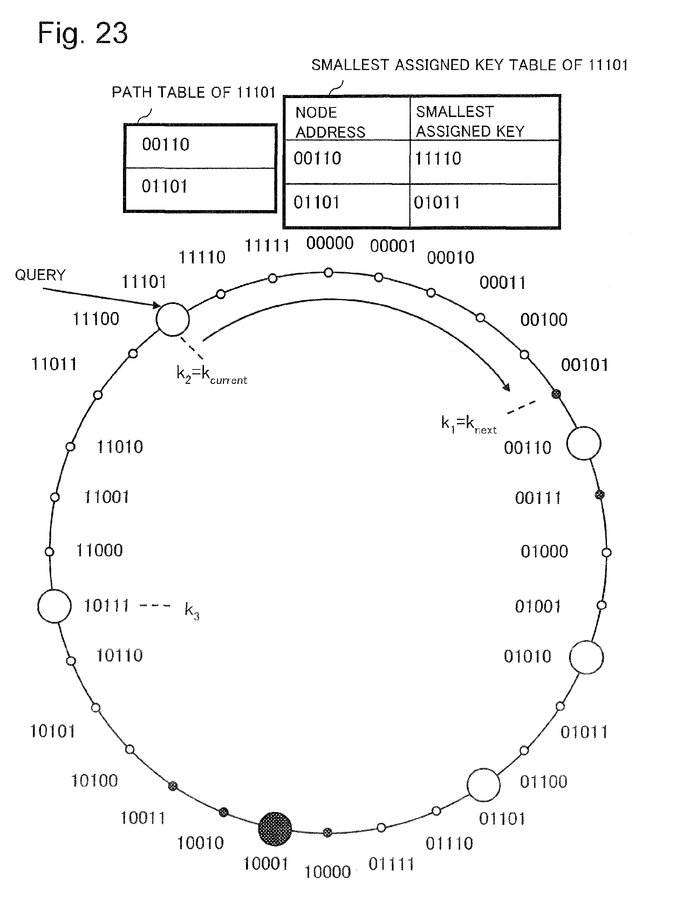

Fig. 23 is a diagram for explaining a specific example of the operation of the node 300 according to the third embodiment of the present invention.

The node 300 processes Steps D1 to D10, and D12 to D15 shown in Fig. 8. Then, the node 300 processes Step G1 shown in Fig. 2 after completing the process of Step D10.

In Step G1 in Fig. 22, the final key calculating unit 305, with reference to the smallest assigned key holding unit 307, specifies a key, which indicates a value obtained by subtracting 1 from the value indicated by the key which is associated with the node address 'next', as the check target key k (Step G1). Then, the operation of the node 300 proceeds to Step D12 shown in Fig. 8.

Next, a specific example of the operation of the node 300 shown in Fig. 8 and Fig. 22 will be described with reference to Fig. 23. In this example, the query includes an attribute x and an attribute y. In this example, the key is a bit stream which is generated by lining bits of subkey of the attribute x and bits of subkey of the attribute y alternately per the bit for each combination of a set of the subkeys {011, 100, 101} included in an attribute x subkey range, and a set of the subkeys {00, 01} included in an attribute y subkey range Moreover, the bit stream is corresponding to the node address which can identify each node 300. Moreover, it is assumed that nodes which exist actually are '11101', '00110', '01010', '01101', '10001' and '10111'.

First, the receiving unit 101 of the node '11101' receives the query (Step D1). The path management unit 102 of the node '11101' holds the keys '00110' and '01101' which indicate nodes existing actually. The largest assigned key of the node '11101' is '11101', and the smallest assigned key is '11000'.

Since the receiving unit 101 receives the query but does not receive the forwarding destination final key ('No' in Step D2), the final key calculating unit 305 specifies the key '10111', which indicates a value obtained by subtracting 1 from the smallest assigned key of the own node, as the final key (Step D4).

The next key calculating unit 103 specifies the largest assigned key '11101' of the own node as the check target key k (Step D5). Then, the next key calculating unit 103 calculates the next key of the check target key k (Step D6). Then, the next key is calculated as '00101'.

Moreover, the query forwarding control unit 104 judges whether the value (k1), which the calculated next key indicates, exists between the value (k2) which the largest assigned key of the own node indicates, and the value (k3) which the final key indicates (Step D7). In this example, the values of k1, k2 and k3 are k1 = '00101', k2 = '11101' and k3 = '10111' respectively. According to Fig. 23, the query forwarding control unit 104 judges that the value (k1), which the calculated next key indicates, exists between the value (k2) which the largest assigned key of the own node indicates, and the value (k3) which the final key indicates ('Yes' in Step D7).

The query forwarding control unit 104 judges that the query forwarding control unit 104 has not received the next key of the check target key k yet from the key calculating unit 103 ('No' in Step D8).

With reference to the path management unit 102, the query forwarding control unit 104 acquires the node address 'addr' which is corresponding to the next key '00101' (Step D9). In this case, the path management unit 102 does not store a key indicating a value which is not larger than the value indicated by the next key '00101'. Therefore, the query forwarding control unit 104 acquires the key '00110', which indicates the smallest value, as the node address 'addr'.

The query forwarding control unit 104 transfers the acquired node address '00110' to the final key calculating unit 305. The final key calculating unit 305 acquires the node address 'next' of the node, to which the key whose distance from the next key is the shortest is assigned, except for the node address '00110' out of the nodes which the path management unit 102 stores (Step D10). In this case, the final key calculating unit 305 acquires '01101' as 'next'.

With reference to the smallest assigned key holding unit 307, the final key calculating unit 305 specifies the key '01010', which indicates the value obtained by subtracting 1 from the value indicated by the key which is associated with the node address '01101', as the check target key k (Step G1).

The final key calculating unit 305 judges whether the value (k4 = 01010), which the new check target key k indicates, exists between the value (k1 = 00101) which is indicated by the next key calculated by the next key calculating unit 103, and the value (k3 = 10111) which the final key indicates (Step D12).

According to Fig. 23, the final key calculating unit 305 judges that the value, which the new check target key k indicates, exists between the value which is indicated by the next key calculated by the next key calculating unit 103, and the value which the final key indicates ('Yes' in Step D12), and carries out the following process. That is, the final key calculating unit 305 interpolates a pair, whose one component is the forwarding destination node address to which the node address 'addr' corresponds and whose another component is the forwarding destination final key to which the check target key k corresponds, in the forwarding list (Step D13). Here, the node address 'addr' is '00110'. Moreover, the check target key k is '01010'. Then, the process of the node '11101' proceeds to Step D6.

The next key calculating unit 103 calculates the next key of the check target key k (Step D6). Then, the next key is calculated as '10000'.

Then, the query forwarding control unit 104 judges whether the value (k1) indicated by the calculated next key exists between the value (k2) which the largest assigned key of the own node indicates, and the value (k3) which the final key indicates (Step D7). In this case, the values of k1. k2 and k3 are k1 = '10000', k2 = "11101', k3 = and '10111' respectively. According to Fig. 23, the query forwarding control unit 104 judges that the value (k1) indicated by the calculated next key exists between the value (k2) which the largest assigned key of the own node indicates, and the value (k3) which the final key indicates ('Yes' in Step D7).

The query forwarding control unit 104 judges that the query forwarding control unit 104 has not received the next key of the check target key k yet from the key calculating unit 103 of the own node ('No' in Step D8).

With reference to the path management unit 102, the query forwarding control unit 104 acquires the node address 'addr' which is corresponding to the next key '10000' (Step D9). In this case, the query forwarding control unit 104 acquires the key '01101', which indicates the largest value among the values not larger than the value indicated by the next key '10000', as the node address 'addr'.

The query forwarding control unit 104 transfers the acquired node address '01101' to the final key calculating unit 305. The final key calculating unit 305 acquires the node address 'next' of the node, to which the key whose distance from the next key is the shortest is assigned, except for the node address '01101' out of the nodes which the path management unit 102 stores (Step D10). In this case, the final key calculating unit 305 acquires '00110' as 'next'.

With reference to the smallest assigned key holding unit 307, the final key calculating unit 305 specifies the key '11101', which indicates the value obtained by subtracting 1 from the value indicated by the key '11110' which is associated with the node address '00110', as the check target key k (Step G1).

The final key calculating unit 305 judges whether the value (k4 = 11101), which the new check target key k indicates, exists between the value (k1 = 00101) which is indicated by the next key calculated by the next key calculating unit 103, and the value (k3 = 10110) which the final key indicates (Step D12).

According to Fig. 23, the final key calculating unit 305 judges that the value, which the new check target key k indicates, does not exist between the value which is indicated by the next key calculated by the next key calculating unit 103, and the value, which the final key indicates ('No' in Step D12), and carries out the following process. That is, the final key calculating unit 305 interpolates a pair, whose one component is the forwarding destination node address to which the node address 'addr' corresponds and whose another component is the forwarding destination final key to which the final key of the own node corresponds, in the forwarding list (Step D14). Here, the node address 'addr' is '01101'. Moreover, the final key of the own node is '10111'.

The query forwarding control unit 104 creates a message per the pair, which is included in the forwarding list generated by the final key calculating unit 305, on the basis of the forwarding destination final key which is one element of the pair, and the corresponding query. Then, the query forwarding control unit 104 sends the created message to the node which is specified by the forwarding destination node address which is the other element of the pair (Step D15).

As a result, the node '11101' defines a range from the largest assigned key to the final key of the own node as a key search target, and transfers the query to a node which is identified by the forwarding destination node address.

The node '00110', which receives the message from the node '11101', specifies the forwarding destination final key '01010', which is included in the message, as the final key of the own node (Step D3). Then, the node '00110' defines similarly a range from the largest assigned key of the own node to the final key as the key search target, and transfers the query to a node which is identified by the forwarding destination node address. An operation of the node '01101' which receives the message from the node '11101' is also similar to the above-mentioned operation.

The range of the key, which is the search target of each node to which the node receiving the query firstly transfers the message, does not overlap each other. The reason is that the forwarding destination final key, which is included in each message, indicates, the value which is obtained by subtracting 1 from the node address 'next' which is corresponding to the next forwarding destination of the message. And, the node, which receives the message, carries out the search in a direction of adding n (n is an integer which becomes larger by 1 per the search) to the value of the key which indicates the own node.

According to the node transfer system 30 of the third exemplary embodiment, the forwarding destination final key is sent to each node together with the query. The forwarding destination final key is corresponding to the final key indicating the value which is obtained by subtracting 1 from the value indicated by the smallest assigned key of another node which is adjacent to the own node and to which the query is sent. Moreover, each node defines the range of the key from the largest assigned key of the own node to the final key of the own node as the key search target. Accordingly, the node transfer system 30 can decrease a fear that the same query may pass through the same node plural times.

Moreover, the node transfer system 30 can decrease a fear that the query may be notified double through the different paths. The reason is that it is impossible that the query reaches each node 300 several times since the key search target of each node 300 does not overlap.

By virtue of the above-mentioned advantage, the node transfer system 30 according to the third exemplary embodiment can obtain high performance even when large volumes of queries are forwarded.

### [Fourth exemplary embodiment]

An information processing system 40 according to a fourth exemplary embodiment includes at least one node 400 like the information processing system 30 according to the third exemplary embodiment.

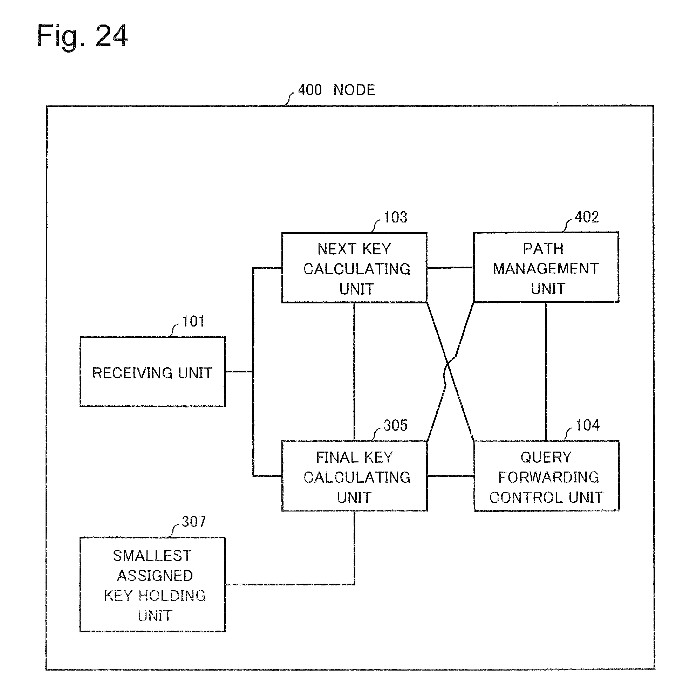

Fig. 24 is a block diagram showing a configuration of the node 400 according to the fourth exemplary embodiment of the present invention.

Referring to Fig. 24, the node 400 according to the fourth exemplary embodiment of the present invention includes the receiving unit 101, a path management unit 402, the next key calculating unit 103, the query forwarding control unit 104, the last key calculating unit 305 and the smallest assigned key holding unit 307.

The node 400 according to the fourth exemplary embodiment is corresponding to a specific example in which Chord is applied as a routing protocol for specifying the next forwarding destination of the query.

### === Path management unit 402===

The path management unit 402 calculates an identification key, which is a key to identify a node corresponding to the next forwarding destination, for a destination key in order to reach a node to which the destination key is assigned. For example, the path management unit 402 calculates the identification key on the basis of the routing protocol such as Chord (for example, refer to a non-patent literature 3) or the like. Chord is a protocol to specify a node, to which a key (identification key) closest to the forwarding destination key is assigned, as the next forwarding destination.

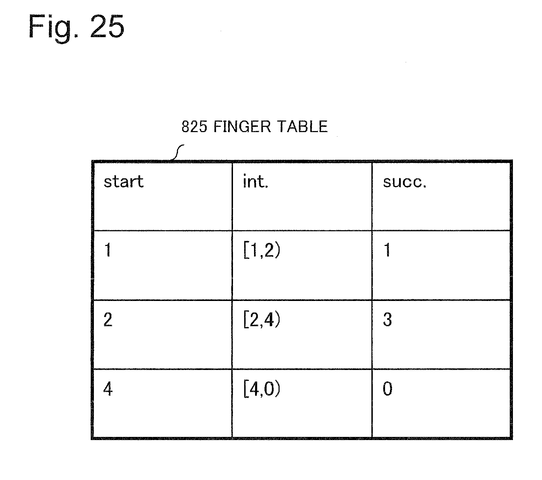

The path management unit 402 stores information (if, for example, Chord is used, information is corresponding to Finger table) which indicates a path with another node 400. Fig. 25 exemplifies information which the path management unit 402 stores. This information is also called a finger table 825. In Fig. 25, 'start' is a key which indicates a value obtained by adding a predetermined number (for example, 2i, where i is an integer not smaller than 0) to a value which a key associated with the own node 400 indicates. Moreover, 'int.' is information which indicates a key range corresponding to the key 'start'. 'start' is n + 2i (i is an integer not smaller than 0) in a node which is associated with a key whose value is, for example, n. 'int.', which is associated with the key 'n + 2 i', is a set of keys k which satisfy an inequality n + 2i <= k <2i + 1, that is, the key range of the key k. 'succ.' is an identifier indicating another node 400, which is identified by a key (identification key) closest to the value of the key which is associated with 'start', out of the nodes corresponding to the keys indicated by 'int.'. In this example, the identification key, and the identifier which indicates the node 400 identified by the identification key are identical each other. Of course, the identification key and the identifier, which is able to identify the node 400, may be different information which are associated each other.

In Fig. 25, 'int.' may be information indicating a set of the keys which are associated with the node identified by 'succ.'. Moreover, the identifier of the node included in 'succ.' may be the node address of the node.

The information processing system 40 can decrease the network load, the serialization processing load and the de-serialization processing load on the basis of not the specific routing protocol but general Chord even when large volumes of the queries are forwarded

### [Fifth exemplary embodiment]

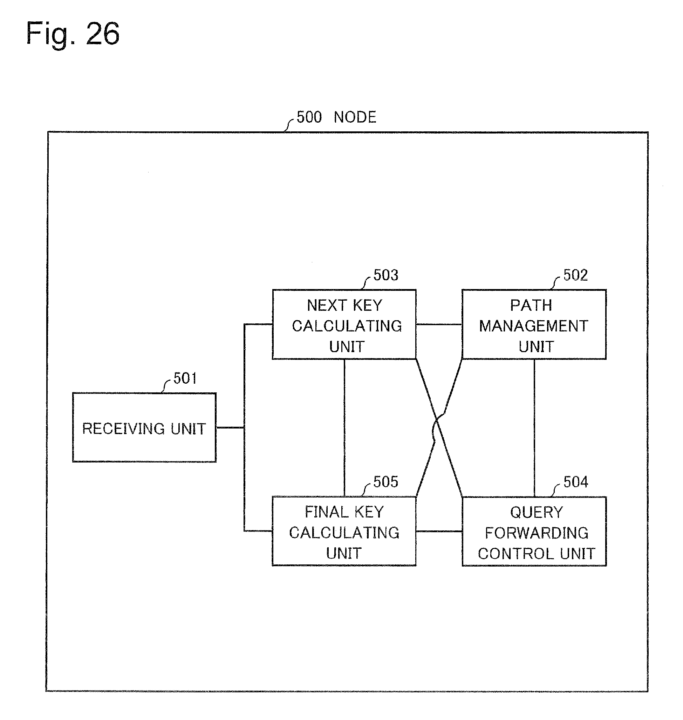

Fig. 26 is a block diagram showing a configuration of a node 500 which an information processing system 50 according to a fifth exemplary embodiment of the present invention includes. Referring to Fig. 26, the node 500 includes a receiving unit 501, a path management unit 502, a next key calculating unit 503, a query forwarding control unit 504 and a final key calculating unit 505.

The receiving unit 501 receives a query which specifies a range of a certain value. Then, the receiving unit 501 transfers the received query to the next key calculating unit 503 which will be described later.

The path management unit 502 stores a key which indicates a certain value.

The next key calculating unit 503 calculates a next key out of the keys which indicate values included in the range specified by the query received from the receiving unit 501. The next key is corresponding to a key which indicates a value closest to a value indicated by a predetermined key corresponding to the node 500.

The query forwarding control unit 504 specifies a magnitude relation between the value which is indicated by the next key calculated by the key calculating unit 503, and the value which is indicated by each key stored in the path management unit 502. Then, the query forwarding control unit 504 specifies a one key out of the keys, which the path management unit 502 stores, on the basis of the specified magnitude relation. Then, the query forwarding control unit 504 specifies a forwarding destination node identifier which is corresponding to an identifier of a device identified on the basis of the value which the specified one key indicates.

Moreover, the query forwarding control unit 504 sends a forwarding destination final key calculated by the final key calculating unit 505 which will be described later, and the query which the receiving unit 501 receives to the device identified by the forwarding node identifier which is specified by the query forwarding controller 504.

The final key calculating unit 505 calculates the forwarding destination final key out of the keys, which the path management unit 502 stores, on the basis of the value which is indicated by the above-mentioned one key corresponding to the forwarding node identifier specified by the query forwarding control unit 504. The forwarding destination final key is corresponding to a key which the device identified by the above-mentioned forwarding destination node identifier can calculate and which indicates bounds of a range of the next key.

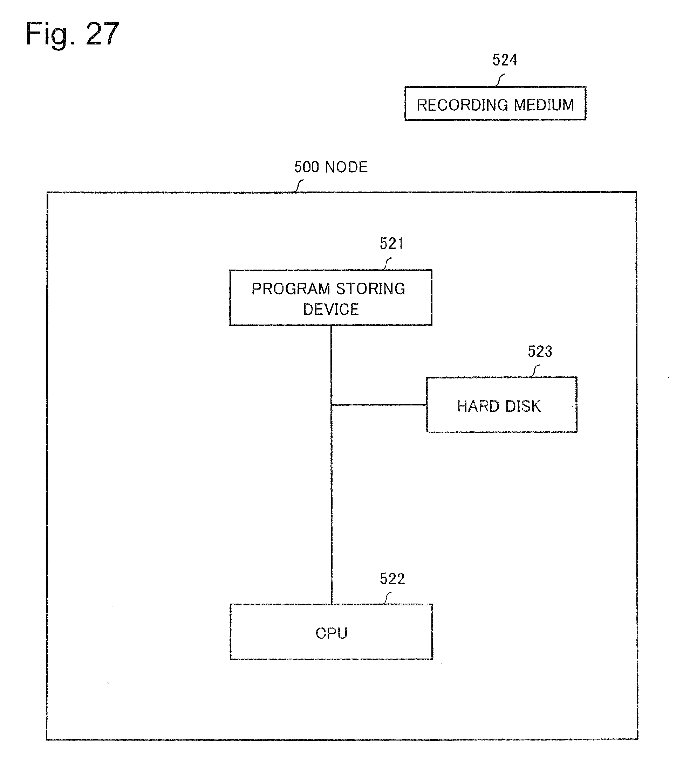

The receiving unit 501, the path management unit 502, the next key calculating unit 503, the query forwarding control unit 504 and the final key calculating unit 505 are realized, for example, by CPU which works on the basis of a program (information processing program). The receiving unit 501, the path management unit 502, the next key calculating unit 503, the query forwarding control unit 504 and the final key calculating unit 505 may be realized by one CPU. In this case, the program is stored, for example, in a program storing device 521(refer to Fig. 27) which the node 500 includes. It is enough that CPU 522 reads the program and works as the receiving unit 501, the path management unit 502, the next key calculating unit 503, the query forwarding control unit 504 and the final key calculating unit 505 on the basis of the program.

Moreover, a recording medium (or storage medium) which records a code of the above-mentioned program may be supplied to the node 500, and the node 500 may read and carry out the code of the program which is stored in the recording medium. That is, the present invention includes also a recording medium 524 storing temporarily or non-temporarily software (information processing program) which is carried by the node 500 according to the fifth exemplary embodiment.

the path management unit 502 may be realized by a storage device such as a hard disk 523.

Since the information processing system, 50 according to the fifth exemplary embodiment includes the node 500 which has above-mentioned configuration, the information processing system 50 can decrease the network load, the serialization processing load and the de-serialization processing load even when large volumes of queries are forwarded.

While the present invention has been described with reference to the exemplary embodiment and the example mentioned above, the present invention is not limited to the exemplary embodiment and the example mentioned above. It is possible to add various changes, which a person skilled in the art can understand, to the composition and the details of the present invention within the scope of the present invention.

In each exemplary embodiment of the present invention, the node 100, the node 200, the node 300, the node 400 and the node 500 are arranged as an information processing device or in a part of the information processing device. Accordingly, one node may be realized by one information processing device. Or, a configuration that, at least, a part of resources such as a memory, CPU, a hard disk or the like which is included in the information processing device is assigned to one node may be used. That is, a plurality of nodes may be realized by one information processing device.

This application is based upon and claims the benefit of priority from Japanese Patent Application No. 2011-012947 filed on January 25, 2011, the disclosure of which is incorporated in its entirety by reference.

### Industrial Applicability

The information processing system according to the present invention can be applied to a Publish/Subscribe type system which forwards large volumes of data (event), which are generated by a device such as RFID (Radio Frequency IDentification), a sensor or the like, to an application which requests the data.

### DESCRIPTION OF THE REFERENCE NUMERALS

10, 20, 30, 40 and 50 Information processing system
100, 200, 300, 400 and 500 Node
101 Receiving unit
102 Path management unit
103 Next key calculating unit
104 Query forwarding control unit
105 Final key calculating unit
206 Query processing unit
307 Smallest assigned key holding unit
121 and 521 Program storing device
122 and 522 CPU
123 and 523 Hard disk
124 and 524 Recording medium
801 Key space
802 Key range
803 Key
804 Attribute space
805 Query area
806, 807 and 808 Smallest assigned key table
819 message
820 Query
821 Forwarding destination final key
822 kcurrent
823 ktmp
824 amax
825 Finger table

## Claims

1. An information processing device, comprising:
a receiving means which receives a query which specifies a range of a certain value;
a path management means which stores a key which indicates a certain value;
a next key calculating means which calculates a next key which is corresponding to a key indicating a value closest to a value indicated by a given key, out of keys indicating values which are contained in said range specified by said query;
a query forwarding control means which specifies a one key out of said keys, which said next path management means stores, on the basis of a magnitude relation between said value indicated by said next key and each of said values of said keys, and specifies a forwarding destination node identifier which is corresponding to an identifier of a device to be identified on the basis of a value of said one key; and
a final key calculating means which calculates a forwarding destination final key which the device identified by said forwarding destination node identifier can calculate and which is corresponding to a key indicating bounds of a range of the next key, out of said keys, which said path management means stores, on the basis of said value which is indicated by said one key and which is corresponding to said forwarding destination node identifier, wherein
said query forwarding control means forwards said query and said forwarding destination final key to said device which is identified by said forwarding destination node identifier.

2. The information processing device according to claim 1, wherein
said final key calculating means specifies a final key, which is corresponding to a key indicating bounds of a range of a next key, which an own information processing device can calculate, on the basis of a judgment whether said receiving means receives said forwarding destination final key together with said query, wherein
said query forwarding control means judges whether a magnitude relation among said value of the next key calculated by said next key calculating means, said value indicated by said given key and a value indicated by said final key is identical with a predetermined magnitude relation or not, and wherein
in the case that said query forwarding control means judges that said magnitude relation is identical with said predetermined magnitude relation, said query forwarding control means specifies a one key out of said keys, which said path management means stores, on the basis of said magnitude relation between said value indicated by said next key and said value of each key stored in said path management means, and specifies a forwarding destination node identifier which is corresponding to an identifier of a device to be identified on the basis of a value of said one key;

3. The information processing device according to claim 2, wherein
in the case that said query forwarding control means judges that said magnitude relation is not identical with said predetermined magnitude relation, said query forwarding control means forwards said query and said forwarding destination final key to the device which is identified by said forwarding destination node identifier.

4. The information processing device according to claim 2 or 3, wherein
said receiving means judges whether said receiving means receives said forwarding destination final key together with said query, and wherein
in the case that said final key calculating means judges that said receiving means receives the forwarding destination final key, said final key calculating means specifies said forwarding destination final key as the final key of the own information processing device.

5. The information processing device according to claim 3, wherein
said receiving means judges whether said receiving means receives said forwarding destination final key together with said query, and wherein
in the case that said final key calculating means judges that said receiving means does not receive the forwarding destination final key, said final key calculating means specifies the one key, which is corresponding to the own information processing device, as the final key.

6. The information processing device according to any one of claims 1 to 5, wherein
said information processing device stores an assigned key range which indicates a set of certain predetermined keys, and wherein
said next key calculating means calculates said next key, which indicates a value closest to the largest value among values indicated by keys which are included in said assigned key range, out of each key which indicates any value included in said range specified by said query.

7. The information processing device according to claim 6, wherein
said query forwarding control means judges whether there is said predetermined relation that the value, which said next key calculated by said next key calculating means indicates, exists between the largest value, among values which are indicated by said keys included in said assigned key range, and a value which is indicated by said final key.

8. The information processing device according to claim 6 or 7, wherein
said next key calculating means calculates said next key, which indicates a value closest to the largest value among values indicated by said keys included in said assigned key range, out of each key which indicates any value included in said range specified said query.

9. The information processing device according to any one of claims 1 to 8, wherein
said query forwarding control means specifies a key, which indicates the largest value not larger than said value indicated by said next key, out of each key which said path management means stores, and specifies a forward destination node identifier which is corresponding to an identifier of a device to be identified on the basis of a value of the specified key.

10. The information processing device according to claim 9, wherein
said final key calculating means calculates a forwarding destination final key, which indicates a value larger than and closest to a value indicated by said key which is specifies by said query forwarding control means, out of said keys which said path management means stores.

11. The information processing device according to any one of claims 1 to 10, wherein
the query is information which indicates a range of each attribute value of plural attributes, wherein
the range of value specified by the query is corresponding to a range of value which is obtained by mapping each combination of the attribute values, which are included in said range of attribute value, to the space-filling curve defined in an attribute space including each attribute, wherein
the key is a value which is determined on the basis of a certain combination of the attribute values, and wherein
said next key calculating means specifies a key, which indicates a value closest to the value indicated by said given key on said space-filling curve, out of keys each of which indicates a value included in said range of value specified by said query".

12. The information processing device according to any one of claims 1 to 11, wherein
the query includes at least one subkey group which is a set of attribute values of one attribute, wherein
a value of the key is corresponding to a value which is specified uniquely on the basis of a combination of each attribute value, wherein
said next key calculating means specifies a query area, which is, at least, a partial space specified by a set of combinations of the attribute values specified by each of said subkey groups included in said query, on the basis of said query out of an attribute space which includes each attribute, wherein
said next key calculating means adds a predetermined number to any one of attribute values specified on the basis of a value of a given key which is included in said assigned key range, and specifies at least one increment key which is corresponding to a key having a value specified on the basis of a combination of said attributes having the attribute value to which the addition has been carried out, wherein
said key calculating means judges whether, at least, a part of an increment area, which is corresponding to a space specified by a combination of attribute values which are specified on the basis of a value indicated by said increment key, is included in said query area or not, and wherein
in the case that said next key calculating means judges that, at least, a part of said increment area is included in said query area, the next key calculating means calculates a key, which has a value specified on the basis of a combination of the smallest attribute values out of combinations of the attribute values which are included commonly in said increment area and in said query area, as the next key.

13. The information processing device according to claim 1, comprising:
a smallest assigned key holding means which associates a node identifier which indicates a certain device, and a key which indicates the smallest value out of keys included in an assigned key range of said device, and stores the node identifier and the key which are in a state of association, wherein
said path management means associates a node identifier which indicates a certain device, and a key which indicates the largest value out of keys included in an assigned key range of said device, and stores the node identifier and the key which are in a state of association, wherein
said query forwarding control means specifies a one key out of keys, which said path management means stores, on the basis of a magnitude relation between said value indicated by said next key and said value indicated by each key which said path management means stores, and specifies a node identifier, which is associated with a value of said one key, as said forwarding destination node identifier, and wherein
said final key calculating means specifies a key, which indicates a value closest to said value indicated by said next key, except for said one key corresponding to said forwarding destination node identifier specified by said query forwarding control means from said path management means, and specifies a node identifier which is associated with the specified key, and reads a key which indicates a value obtained by subtracting a predetermined number from a value which is indicated by the key associated with the node identifier, from said smallest key holding means, and calculates the read keys as said forwarding destination final key,

14. The information processing device according to claim 1, comprising:
a smallest assigned key holding means which associates a node identifier which indicates a certain device, and a key which indicates the smallest value out of keys included in an assigned key range of said device, and stores the node identifier and the key which are in a state of association, wherein
said path management means associates a certain key, and a one key corresponding to a node identifier which can identify an own device whose assigned key range includes said certain key, and stores said certain key and said one key which are in a state of association, wherein
said query forwarding control means specifies a node identifier, which is associated with a key indicating the largest value not larger than a value indicated by said next key, as said forwarding destination node identifier from said path management means, and wherein
said final key calculating means specifies a node identifier, which indicates a value closest to said value indicated said next key, except for said forwarding destination node identifier, which is specified by said query forwarding control means, from said path management means, and reads a key, which indicates a value obtained by subtracting a predetermined number from a value indicated by a key associated with the specified node identifier, from said smallest assigned key, holding means, and calculates the read key as said forwarding destination final key.

15. The information processing device according to any one of claims 1 to 14, wherein
said information processing device stores an assigned key range which indicates a set of certain predetermined keys, which wherein
said information processing device includes a query processing means which processes the query, and wherein
when said receiving means receives the query, said next key calculating means calculates a next key corresponding to a key, which indicates a value closest to the smallest value among values indicated by the keys which are included in the received query and said assigned key range, out of the keys each of which indicates any value included in said range specified by said query, and forwards said query to said query processing means in the case that the calculated next key is included in said assigned key range.

16. An information processing system, comprising:
at least one information processing device, wherein
said information processing device, comprising:
a receiving means which receives a query which specifies a range of a certain value;
a path management means which stores a key which indicates a certain value,
a next key calculating means which calculates a next key, which is corresponding to a key indicating a value closest to a value indicated by a given key, out of keys indicating values which are contained in said range specified by said query;
a query forwarding control means which specifies a one key out of said keys, which said path management means stores, on the basis of a magnitude relation between said value indicated by said next key and each of said values of keys stored in said path management means, and specifies a forwarding destination node identifier which is corresponding to an identifier of an information processing device to be identified on the basis of a value of said one key; and
a final key calculating means which calculates a forwarding destination final key, which the information processing device identified by said forwarding destination node identifier can calculate and which is corresponding to a key indicating bounds of a range of the next key, out of said keys, which which said path management means stores, on the basis of said value which is indicated by said one key and which is corresponding to said forwarding destination node identifier, and wherein
said query forwarding control unit forwards said query and said forwarding destination final key to said information processing device which is identified by said forwarding destination node identifier.

17. An information processing method, comprising:
receiving a query which specifies a range of a certain value;
storing a key which indicates a certain value;
calculating a next key, which is corresponding to a key indicating a value closest to a value indicated by a given key, out of keys indicating values which are contained in said range specified by said query;
specifying a one key out of said stored keys on the basis of a magnitude relation between said value indicated by said next key and each of said values indicated by said stored keys, and specifying a forwarding destination node identifier which is corresponding to an identifier of a device to be identified on the basis of a value of said one key;
calculating a forwarding destination final key, which the device identified by said forwarding destination node identifier can calculate and which is corresponding to a key indicating bounds of a range of said next key, out of said stored keys on the basis of said value which is indicated by said one key and which is corresponding to said forwarding destination node identifier; and
forwarding said query and said forwarding destination final key to said device which is identified by said forwarding destination node identifier.

18. A recording medium to store an information processing program which makes a computer carry out:
a process of receiving a query which specifies a range of a certain value;
a process of storing a key which indicates a certain value;
a process of calculating a next key, which is corresponding to a key indicating a value closest to a value indicated by a given key, out of keys indicating values which are contained in said range specified by said query;
a process of specifying a one key out of said stored keys on the basis of a magnitude relation between said value indicated by said next key and each of said values of said stored keys, and specifying a forwarding destination node identifier which is corresponding to an identifier of a device to be identified on the basis of a value of said one key;
a process of calculating a forwarding destination final key, which the device identified by said forwarding destination node identifier can calculate and which is corresponding to a key indicating bounds of a range of said next key, out of said stored keys on the basis of said value which is indicated by said one key and which is corresponding to said forwarding destination node identifier; and
a process of forwarding said query and said forwarding destination final key to said device which is identified by said forwarding destination node identifier.
